# EUROPEAN PATENT APPLICATION

(11) **EP 4 790 955 A1**
(43) Date of publication of application: **12.08.2026**
(21) Application number: 24878846.5
(22) Date of filing: 30.09.2024
(51) Int. Cl.: H04L 27/00

(54) **PHASE CORRECTION METHOD AND COMMUNICATION DEVICE**

(30) Priority: 19.10.2023 CN 202311362326
(71) Applicant: HUAWEI TECHNOLOGIES CO., LTD., Shenzhen 518129 (CN)
(72) Inventor: DAI, Jingyu, Shenzhen, Guangdong 518129 (CN); SUN, Xiaoguang, Shenzhen, Guangdong 518129 (CN); FAN, Gaoqiang, Shenzhen, Guangdong 518129 (CN); YANG, Miao, Shenzhen, Guangdong 518129 (CN); XUE, Zhiyang, Shenzhen, Guangdong 518129 (CN)
(74) Representative: Goddar, Heinz J.
(86) International application number: PCT/CN2024/122660
(87) International publication number: WO 2025/082202

(57) **Abstract**

This application provides a phase correction method and a communication apparatus. The apparatus includes a radio frequency module and a signal transmission module. The radio frequency module includes a plurality of radio frequency interfaces, the plurality of radio frequency interfaces are connected to the signal transmission module, and the signal transmission module is further connected to at least one antenna interface. The radio frequency module is configured to send a first radio frequency signal through the plurality of radio frequency interfaces. The signal transmission module is configured to transmit the first radio frequency signal to the at least one antenna interface, and loop the first radio frequency signal back to the radio frequency module at the at least one antenna interface. The radio frequency module is further configured to correct, based on the looped-back first radio frequency signal, phases of signals sent by the plurality of radio frequency interfaces. In this application, phase correction can be performed on each radio frequency interface of the radio frequency module when the communication apparatus does not provide a correction interface, thereby saving interface resources.

## Description

This application claims priority to Chinese Patent Application No. 202311362326.4, filed with the China National Intellectual Property Administration on October 19, 2023, and entitled "PHASE CORRECTION METHOD AND COMMUNICATION APPARATUS", which is incorporated herein by reference in its entirety.

### TECHNICAL FIELD

This application relates to the field of communication technologies, and in particular, to a phase correction method and a communication apparatus.

### BACKGROUND

In wireless communication technology, a plurality of radio frequency units within a radio frequency module are communicatively connected to a plurality of antenna elements in an array antenna, and a radio frequency signal generated by each radio frequency unit may be transmitted to an antenna element through a corresponding radio frequency channel. However, due to individual differences among different radio frequency units, there is a phase difference in radio frequency signals generated by the different radio frequency units. In addition, due to individual differences among different radio frequency channels, a phase difference is generated after a radio frequency signal is transmitted through different radio frequency channels, which in turn causes a phase difference among radio frequency signals received by the plurality of antenna elements.

Conventional approaches address this issue by having an array antenna return a plurality of received radio frequency signals to a radio frequency module through an additional correction interface. The radio frequency module then corrects the phase difference between the plurality of radio frequency signals, ensuring that the radio frequency signals transmitted by the radio frequency module to the array antenna through a radio frequency channel are phase-aligned. It can be learned that, phase correction requires additional correction interfaces on both the radio frequency module and the array antenna. Consequently, a significant technical challenge faced by practitioners in the field is how to implement phase correction for a plurality of radio frequency signals when the radio frequency module or the array antenna does not provide such a correction interface.

### SUMMARY

This application provides a phase correction method and a communication apparatus to perform phase correction on each radio frequency interface of a radio frequency module when the communication apparatus does not provide a correction interface, thereby saving interface resources.

According to a first aspect, an embodiment of this application provides a communication apparatus. The apparatus includes a radio frequency module and a signal transmission module. The radio frequency module includes a plurality of radio frequency interfaces, the plurality of radio frequency interfaces are connected to the signal transmission module, and the signal transmission module is further connected to at least one antenna interface.

The radio frequency module is configured to send a first radio frequency signal through the plurality of radio frequency interfaces.

The signal transmission module is configured to transmit the first radio frequency signal to the at least one antenna interface, and loop the first radio frequency signal back to the radio frequency module at the at least one antenna interface.

The radio frequency module is further configured to correct, based on the looped-back first radio frequency signal, phases of signals sent by the plurality of radio frequency interfaces.

In this solution, the radio frequency module is connected to the antenna interface through the signal transmission module, and sends the first radio frequency signal to the signal transmission module through the plurality of radio frequency interfaces. The signal transmission module may send the first radio frequency signal to the antenna interface, and loop the first radio frequency signal back to the radio frequency module at the antenna interface, so that the radio frequency module may correct, based on the looped-back first radio frequency signal, the phases of the signals sent by the plurality of radio frequency interfaces. It may be understood that the radio frequency module may send a radio frequency signal through each radio frequency interface, and then the signal transmission module may loop the radio frequency signal sent by each radio frequency interface back to the radio frequency module, so that the radio frequency module performs phase correction on each radio frequency interface that sends the radio frequency signal. Therefore, in this solution, the communication apparatus may correct a phase of a signal sent by each radio frequency interface of the radio frequency module, and does not need to be provided with an additional correction interface, thereby saving interface resources and having high applicability.

In a possible implementation, the signal transmission module is connected to a plurality of antenna interfaces, and the plurality of antenna interfaces include the at least one antenna interface.

The signal transmission module includes a plurality of first transmission interfaces and a plurality of second transmission interfaces, the plurality of first transmission interfaces are connected to the plurality of radio frequency interfaces in a one-to-one correspondence, the plurality of second transmission interfaces are connected to the plurality of antenna interfaces in a one-to-one correspondence, and each first transmission interface is interconnected with any one of the plurality of second transmission interfaces.

In this solution, in the signal transmission module, each first transmission interface is interconnected with each second transmission interface. The signal transmission module may transmit, through the plurality of first transmission interfaces to the plurality of interconnected second transmission interfaces, the first radio frequency signal sent by the plurality of radio frequency interfaces, to send the first radio frequency signal to the at least one antenna interface. In addition, the signal transmission module may further transmit, through the second transmission interfaces to the plurality of interconnected first transmission interfaces, the first radio frequency signal that is looped back at the antenna interface, to complete loopback of the first radio frequency signal.

In a possible implementation, the signal transmission module includes n first transmission interfaces and n second transmission interfaces, and the signal transmission module includes n1 first bridge circuits and n1 second bridge circuits; and each first bridge circuit includes n2 first transmission interfaces, each second bridge circuit includes n2 second transmission interfaces, and each first bridge circuit is connected to any one of the plurality of second bridge circuits, where n1×n2 is equal to n.

In this solution, the signal transmission module connects the n1 first bridge circuits to the n1 second bridge circuits, so that a first transmission interface of each first bridge circuit can be interconnected with a second transmission interface of each second bridge circuit. It may be understood that, in this solution, the first bridge circuit and the second bridge circuit have a simple structure and are easy to implement. In addition, a quantity of first bridge circuits and a quantity of second bridge circuits may be adjusted based on an actual application scenario, so that flexibility is high.

In a possible implementation, the signal transmission module further includes a first switch, the first switch is disposed between a first antenna interface and the second transmission interface correspondingly connected to the first antenna interface, and the first antenna interface is any one of the at least one antenna interface.

Looping the first radio frequency signal back to the radio frequency module at the at least one antenna interface includes:
looping the first radio frequency signal back to the radio frequency module at the first antenna interface through the turned-off first switch.

In this solution, the signal transmission module may reflect, back to the second transmission interface through the turned-off first switch, the first radio frequency signal transmitted from the second transmission interface to the first antenna interface, so that the signal transmission module may transmit, back to the radio frequency module, the first radio frequency signal reflected by the first switch, and further implement loopback of the first radio frequency signal. It may be understood that, in this solution, the first switch has a simple structure and is easy to control.

In a possible implementation, the radio frequency module is configured to control the first switch to be turned off.

That the radio frequency module is configured to send the first radio frequency signal through the plurality of radio frequency interfaces includes: When a first radio frequency interface among the plurality of radio frequency interfaces is configured to receive a signal, the radio frequency module is configured to send a second radio frequency signal through a plurality of second radio frequency interfaces; and the first radio frequency interface is any one of the plurality of radio frequency interfaces, and the second radio frequency interfaces are remaining radio frequency interfaces other than the first radio frequency interface among the plurality of radio frequency interfaces.

The signal transmission module is specifically configured to loop the second radio frequency signal back to the first radio frequency interface of the radio frequency module at the first antenna interface through the turned-off first switch.

In this solution, the radio frequency module may send the second radio frequency signal through the plurality of second radio frequency interfaces, and receive, through the first radio frequency interface, the second radio frequency signal that is looped back by the signal transmission module, so as to correct, based on the looped-back second radio frequency signal, phases of signals sent by the plurality of second radio frequency interfaces. It may be understood that before sending the second radio frequency signal, the radio frequency module may first control the first switch to be turned off.

In a possible implementation, that the radio frequency module is configured to send the first radio frequency signal through the plurality of radio frequency interfaces further includes: The radio frequency module is configured to send a third radio frequency signal through the first radio frequency interface and a third radio frequency interface, and the third radio frequency interface is any one of the plurality of second radio frequency interfaces.

The signal transmission module is further specifically configured to loop the third radio frequency signal back to a fourth radio frequency interface of the radio frequency module at the first antenna interface through the turned-off first switch, and the fourth radio frequency interface is any one of the plurality of second radio frequency interfaces other than the third radio frequency interface.

In this solution, after correcting the phases of the signals sent by the plurality of second radio frequency interfaces, the radio frequency module may send the third radio frequency signal through the first radio frequency interface and the third radio frequency interface, and receive, through the fourth radio frequency interface, the third radio frequency signal looped back by the signal transmission module, so as to correct, based on the looped-back third radio frequency signal, a phase of a signal sent by the first radio frequency interface, and further implement phase correction on each radio frequency interface of the radio frequency module.

In a possible implementation, the signal transmission module further includes a second switch and a third switch; the second switch is disposed between a second antenna interface and the second transmission interface correspondingly connected to the second antenna interface; the second antenna interface is any one of the at least one antenna interface; the third switch is disposed between a fifth radio frequency interface and the first transmission interface correspondingly connected to the fifth radio frequency interface; and the fifth radio frequency interface is any one of the plurality of radio frequency interfaces.

The radio frequency module is configured to control the second switch and the third switch to be turned on, so that a first end of the second switch is connected to a first end of a first conductive path, and a first end of the third switch is connected to a second end of the first conductive path; and a second end of the second switch is further connected to the second transmission interface correspondingly connected to the second antenna interface, and a second end of the third switch is further connected to the fifth radio frequency interface.

Looping the first radio frequency signal back to the radio frequency module at the at least one antenna interface includes:
looping a fourth radio frequency signal back to the fifth radio frequency interface at the second antenna interface through the first conductive path, where the fourth radio frequency signal is a radio frequency signal sent by a plurality of sixth radio frequency interfaces, and the plurality of sixth radio frequency interfaces are remaining radio frequency interfaces other than the fifth radio frequency interface among the plurality of radio frequency interfaces.

In this solution, by turning on the second switch and the third switch, the signal transmission module may loop the fourth radio frequency signal sent by the plurality of sixth radio frequency interfaces back to the fifth radio frequency interface of the radio frequency module, so that the radio frequency module corrects, based on the looped-back fourth radio frequency signal, phases of signals sent by the plurality of sixth radio frequency interfaces. It may be understood that, in this solution, the second switch and the third switch have a simple structure and are easy to control.

In a possible implementation, the signal transmission module further includes a fourth switch, the fourth switch is disposed between a seventh radio frequency interface and the first transmission interface correspondingly connected to the seventh radio frequency interface, and the seventh radio frequency interface is any one of the plurality of sixth radio frequency interfaces.

The radio frequency module is configured to control the second switch and the fourth switch to be turned on, so that the first end of the second switch is connected to a first end of a second conductive path, and a first end of the fourth switch is connected to a second end of the second conductive path; and the second end of the second switch is further connected to the second transmission interface correspondingly connected to the second antenna interface, and a second end of the fourth switch is further connected to the seventh radio frequency interface.

Looping the first radio frequency signal back to the radio frequency module at the at least one antenna interface further includes:
looping a fifth radio frequency signal back to the seventh radio frequency interface at the second antenna interface through the second conductive path, where the fifth radio frequency signal is a radio frequency signal sent by the fifth radio frequency interface and an eighth radio frequency interface, and the eighth radio frequency interface is any one of the plurality of radio frequency interfaces other than the seventh radio frequency interface.

In this solution, after correcting the phases of the signals sent by the plurality of sixth radio frequency interfaces, the radio frequency module may send the fifth radio frequency signal through the fifth radio frequency interface and the seventh radio frequency interface, and receive, through the fifth radio frequency interface, the fifth radio frequency signal looped back by the signal transmission module, so as to correct, based on the looped-back fifth radio frequency signal, a phase of a signal sent by the fifth radio frequency interface, and further implement phase correction on each radio frequency interface of the radio frequency module.

According to a second aspect, this application provides a communication apparatus. The apparatus includes a radio frequency module, a signal transmission module, and a signal transmitting module; the radio frequency module includes a plurality of radio frequency interfaces, the plurality of radio frequency interfaces are connected to the signal transmission module, and the signal transmission module is further connected to a first antenna interface; and the first antenna interface is further connected to the signal transmitting module.

The signal transmitting module is configured to send a radio frequency signal through the first antenna interface.

The signal transmission module is configured to transmit the radio frequency signal to the radio frequency module through the plurality of radio frequency interfaces.

The radio frequency module is configured to correct, based on the radio frequency signal received by the plurality of radio frequency interfaces, phases of signals received by the plurality of radio frequency interfaces.

In this solution, the signal transmitting module is connected to the radio frequency module through the signal transmission module, and sends the radio frequency signal to the radio frequency module through the signal transmission module. The signal transmission module may transmit the radio frequency signal to the plurality of radio frequency interfaces of the radio frequency module. The radio frequency module may correct, based on the radio frequency signal received by the plurality of radio frequency interfaces, phases of signals received by the plurality of radio frequency interfaces. It may be understood that, in this solution, the communication apparatus may correct a phase of a signal received by each radio frequency interface of the radio frequency module, and does not need to be provided with an additional correction interface, thereby saving interface resources and having high applicability.

In a possible implementation, the signal transmission module is connected to a plurality of antenna interfaces, and the plurality of antenna interfaces include the first antenna interface.

The signal transmission module includes a plurality of first transmission interfaces and a plurality of second transmission interfaces, the plurality of first transmission interfaces are connected to the plurality of radio frequency interfaces in a one-to-one correspondence, the plurality of second transmission interfaces are connected to the plurality of antenna interfaces in a one-to-one correspondence, and each first transmission interface is interconnected with any one of the plurality of second transmission interfaces.

In this solution, in the signal transmission module, each first transmission interface is interconnected with each second transmission interface, and the signal transmission module may transmit, to the plurality of radio frequency interfaces, the radio frequency signal sent by the signal transmitting module, so that the plurality of radio frequency interfaces of the radio frequency module can receive the radio frequency signal sent by the signal transmission unit.

In a possible implementation, the signal transmission module includes n first transmission interfaces and n second transmission interfaces, and the signal transmission module includes n1 first bridge circuits and n1 second bridge circuits; and each first bridge circuit includes n2 first transmission interfaces, each second bridge circuit includes n2 second transmission interfaces, and each first bridge circuit is connected to any one of the plurality of second bridge circuits, where n1×n2 is equal to n.

In this solution, the signal transmission module connects the n1 first bridge circuits to the n1 second bridge circuits, so that a first transmission interface of each first bridge circuit can be interconnected with a second transmission interface of each second bridge circuit. It may be understood that, in this solution, the first bridge circuit and the second bridge circuit have a simple structure and are easy to implement. In addition, a quantity of first bridge circuits and a quantity of second bridge circuits may be adjusted based on an actual application scenario, so that flexibility is high.

According to a third aspect, an embodiment of this application provides a phase correction method. The method is applied to a radio frequency module, the radio frequency module includes a plurality of radio frequency interfaces, the plurality of radio frequency interfaces are connected to a signal transmission module, the signal transmission module is further connected to at least one antenna interface, and the method includes:
sending a first radio frequency signal through the plurality of radio frequency interfaces;
receiving the first radio frequency signal that is looped back by the signal transmission module, where the first radio frequency signal is transmitted by the signal transmission module to the at least one antenna interface, and is looped back to the radio frequency module at the at least one antenna interface; and
correcting, based on the looped-back first radio frequency signal, phases of signals sent by the plurality of radio frequency interfaces.

In a possible implementation, the signal transmission module is connected to a plurality of antenna interfaces, and the plurality of antenna interfaces include the at least one antenna interface.

The signal transmission module includes a plurality of first transmission interfaces and a plurality of second transmission interfaces, the plurality of first transmission interfaces are connected to the plurality of radio frequency interfaces in a one-to-one correspondence, the plurality of second transmission interfaces are connected to the plurality of antenna interfaces in a one-to-one correspondence, and each first transmission interface is interconnected with any one of the plurality of second transmission interfaces.

In a possible implementation, the signal transmission module includes n first transmission interfaces and n second transmission interfaces, and the signal transmission module includes n1 first bridge circuits and n1 second bridge circuits; and each first bridge circuit includes n2 first transmission interfaces, each second bridge circuit includes n2 second transmission interfaces, and each first bridge circuit is connected to any one of the n1 second bridge circuits, where n1×n2 is equal to n.

In a possible implementation, the signal transmission module further includes a first switch, the first switch is disposed between a first antenna interface and the second transmission interface correspondingly connected to the first antenna interface, and the first antenna interface is any one of the at least one antenna interface.

Receiving the first radio frequency signal that is looped back by the signal transmission module includes:
receiving the first radio frequency signal that is looped back by the signal transmission module at the first antenna interface through the turned-off first switch.

In a possible implementation, the radio frequency module controls the first switch to be turned off, and sending the first radio frequency signal through the plurality of radio frequency interfaces includes:
when a first radio frequency interface among the plurality of radio frequency interfaces is configured to receive a signal, sending, by the radio frequency module, a second radio frequency signal through a plurality of second radio frequency interfaces, where the first radio frequency interface is any one of the plurality of radio frequency interfaces, and the second radio frequency interfaces are remaining radio frequency interfaces other than the first radio frequency interface among the plurality of radio frequency interfaces; and
receiving, through the first radio frequency interface, the second radio frequency signal that is looped back by the signal transmission module at the first antenna interface through the turned-off first switch.

In a possible implementation, sending the first radio frequency signal through the plurality of radio frequency interfaces further includes: sending, by the radio frequency module, a third radio frequency signal through the first radio frequency interface and a third radio frequency interface, where the third radio frequency interface is any one of the plurality of second radio frequency interfaces; and
receiving, through a fourth radio frequency interface of the radio frequency module, the third radio frequency signal that is looped back by the signal transmission module at the first antenna interface through the turned-off first switch, where the fourth radio frequency interface is any one of the plurality of second radio frequency interfaces other than the third radio frequency interface.

In a possible implementation, the signal transmission module further includes a second switch and a third switch; the second switch is disposed between a second antenna interface and the second transmission interface correspondingly connected to the second antenna interface; the second antenna interface is any one of the at least one antenna interface; the third switch is disposed between a fifth radio frequency interface and the first transmission interface correspondingly connected to the fifth radio frequency interface; the fifth radio frequency interface is any one of the plurality of radio frequency interfaces; and the method includes:
controlling the second switch and the third switch to be turned on, so that a first end of the second switch is connected to a first end of a first conductive path, and a first end of the third switch is connected to a second end of the first conductive path; and a second end of the second switch is further connected to the second transmission interface correspondingly connected to the second antenna interface, and a second end of the third switch is further connected to the fifth radio frequency interface; and
receiving the first radio frequency signal that is looped back by the signal transmission module includes:
   receiving, through the fifth radio frequency interface, a fourth radio frequency signal that is looped back by the signal transmission module at the second antenna interface through the first conductive path, where the fourth radio frequency signal is a radio frequency signal sent by a plurality of sixth radio frequency interfaces, and the plurality of sixth radio frequency interfaces are remaining radio frequency interfaces other than the fifth radio frequency interface among the plurality of radio frequency interfaces.

In a possible implementation, the signal transmission module further includes a fourth switch, the fourth switch is disposed between a seventh radio frequency interface and the first transmission interface correspondingly connected to the seventh radio frequency interface, and the seventh radio frequency interface is any one of the plurality of sixth radio frequency interfaces; and the method includes:
controlling the second switch and the fourth switch to be turned on, so that the first end of the second switch is connected to a first end of a second conductive path, and a first end of the fourth switch is connected to a second end of the second conductive path; and the second end of the second switch is further connected to the second transmission interface correspondingly connected to the second antenna interface, and a second end of the fourth switch is further connected to the seventh radio frequency interface; and
receiving the first radio frequency signal that is looped back by the signal transmission module includes:
   receiving, through the seventh radio frequency interface, a fifth radio frequency signal that is looped back by the signal transmission module at the second antenna interface through the second switch connected to the fourth switch, where the fifth radio frequency signal is a radio frequency signal sent by the fifth radio frequency interface and an eighth radio frequency interface, and the eighth radio frequency interface is any one of the plurality of radio frequency interfaces other than the seventh radio frequency interface.

According to a fourth aspect, an embodiment of this application further provides a phase correction method. The method is applied to a radio frequency module, the radio frequency module includes a plurality of radio frequency interfaces, the plurality of radio frequency interfaces are connected to a signal transmission module, the signal transmission module is further connected to a first antenna interface, and the first antenna interface is further connected to a signal transmitting module; and the method includes:
receiving, through the plurality of radio frequency interfaces, a radio frequency signal transmitted by the signal transmission module, where the radio frequency signal is sent by the signal transmitting module through the first antenna interface, and is transmitted by the signal transmission module to the plurality of radio frequency interfaces; and
correcting, based on the radio frequency signal received by the plurality of radio frequency interfaces, phases of signals received by the plurality of radio frequency interfaces.

In a possible implementation, the signal transmission module is connected to a plurality of antenna interfaces, and the plurality of antenna interfaces include the first antenna interface.

The signal transmission module includes a plurality of first transmission interfaces and a plurality of second transmission interfaces, the plurality of first transmission interfaces are connected to the plurality of radio frequency interfaces in a one-to-one correspondence, the plurality of second transmission interfaces are connected to the plurality of antenna interfaces in a one-to-one correspondence, and each first transmission interface is interconnected with any one of the plurality of second transmission interfaces.

In a possible implementation, the signal transmission module includes n first transmission interfaces and n second transmission interfaces, and the signal transmission module includes n1 first bridge circuits and n1 second bridge circuits; and each first bridge circuit includes n2 first transmission interfaces, each second bridge circuit includes n2 second transmission interfaces, and each first bridge circuit is connected to any one of the plurality of second bridge circuits, where n1×n2 is equal to n.

According to a fifth aspect, this application provides a communication apparatus. The communication apparatus includes a processor and a memory. The memory is coupled to the processor. When executing a computer program or computer instructions stored in the memory, the processor may implement the method according to any implementation of the third aspect. The communication apparatus may further include a communication interface, and the communication interface is used by the communication apparatus to communicate with another apparatus. For example, the communication interface may be a transceiver, a circuit, a bus, a module, or another type of communication interface.

In a possible implementation, the device may include:
the memory, configured to store the computer program or the computer instructions; and
the processor, configured to:
   send a first radio frequency signal through the plurality of radio frequency interfaces;
   receive the first radio frequency signal that is looped back by the signal transmission module, where the first radio frequency signal is transmitted by the signal transmission module to the at least one antenna interface, and is looped back to the radio frequency module at the at least one antenna interface; and
   correct, based on the looped-back first radio frequency signal, phases of signals sent by the plurality of radio frequency interfaces.

It should be noted that, in this application, the computer program or the computer instructions in the memory may be pre-stored, or may be downloaded from the Internet and stored when the device is used. A source of the computer program or the computer instructions in the memory is not specifically limited in this application. The coupling in this embodiment of this application may be an indirect coupling or a connection between apparatuses, units, or modules in an electrical form, a mechanical form, or another form, and is used for information exchange between the apparatuses, the units, or the modules.

According to a sixth aspect, this application provides a communication apparatus. The communication apparatus includes a processor and a memory. The memory is coupled to the processor. When executing a computer program or computer instructions stored in the memory, the processor may implement the method according to any implementation of the fourth aspect. The communication apparatus may further include a communication interface, and the communication interface is used by the communication apparatus to communicate with another apparatus. For example, the communication interface may be a transceiver, a circuit, a bus, a module, or another type of communication interface.

In a possible implementation, the device may include:
the memory, configured to store the computer program or the computer instructions; and
the processor, configured to:
   receive, through the plurality of radio frequency interfaces, a radio frequency signal transmitted by the signal transmission module, where the radio frequency signal is sent by the signal transmitting module through the first antenna interface, and is transmitted by the signal transmission module to the plurality of radio frequency interfaces; and
   correct, based on the radio frequency signal received by the plurality of radio frequency interfaces, phases of signals received by the plurality of radio frequency interfaces.

It should be noted that, in this application, the computer program or the computer instructions in the memory may be pre-stored, or may be downloaded from the Internet and stored when the device is used. A source of the computer program or the computer instructions in the memory is not specifically limited in this application. The coupling in this embodiment of this application may be an indirect coupling or a connection between apparatuses, units, or modules in an electrical form, a mechanical form, or another form, and is used for information exchange between the apparatuses, the units, or the modules.

According to a seventh aspect, this application provides a computer-readable storage medium. The computer-readable storage medium stores a computer program or computer instructions, and when the computer program or the computer instructions are executed by a processor, the method according to any implementation of the third aspect is implemented.

According to an eighth aspect, this application provides a computer-readable storage medium. The computer-readable storage medium stores a computer program or computer instructions, and when the computer program or the computer instructions are executed by a processor, the method according to any implementation of the fourth aspect is implemented.

According to a ninth aspect, this application provides a computer program product. When the computer program product is executed by a processor, the method according to any implementation of the third aspect is performed.

According to a tenth aspect, this application provides a computer program product. When the computer program product is executed by a processor, the method according to any implementation of the fourth aspect is performed.

According to an eleventh aspect, an embodiment of this application provides a chip. The chip includes a processor, and the processor is configured to execute a computer program or computer instructions stored in a memory, so that the chip performs the method according to any implementation of the third aspect.

According to a twelfth aspect, an embodiment of this application provides a chip. The chip includes a processor, and the processor is configured to execute a computer program or computer instructions stored in a memory, so that the chip performs the method according to any implementation of the fourth aspect.

The solutions provided in the third aspect to the twelfth aspect are used to implement or cooperate to implement the method correspondingly provided in the first aspect or the second aspect, and therefore can achieve same or corresponding beneficial effects as the corresponding method in the first aspect or the second aspect. Details are not described herein again.

### BRIEF DESCRIPTION OF DRAWINGS

The following describes accompanying drawings used in embodiments of this application.
FIG. 1 to FIG. 6 are diagrams of a structure of a communication apparatus;
FIG. 7, FIG. 8, FIG. 10, FIG. 11, and FIG. 13 are diagrams of a structure of a signal transmission module;
FIG. 9, FIG. 12, and FIG. 14 are schematic flowcharts of a phase correction method; and
FIG. 15 to FIG. 17 are diagrams of a structure of a communication apparatus.

### DESCRIPTION OF EMBODIMENTS

The following clearly and completely describes the technical solutions in embodiments of this application with reference to the accompanying drawings in embodiments of this application. It is clear that the described embodiments are a part rather than all of embodiments of this application. All other embodiments obtained by a person of ordinary skill in the art based on embodiments of this application without creative efforts shall fall within the protection scope of this application.

In embodiments of this application, ''a plurality of" means two or more than two. In embodiments of this application, "and/or" is used to describe an association relationship between associated objects, and indicates three relationships that may exist independently. For example, A and/or B may indicate the following cases: Only A exists, only B exists, or both A and B exist. A description like "at least one piece (or at least one) of a1, a2, ..., and an" used in embodiments of this application includes a case in which any one of a1, a2, ..., and an exists alone, and also includes any combination of any plurality of a1, a2, ..., and an. Each case may exist alone. For example, a description of "at least one of a, b, and c" includes a case of a single a, a single b, a single c, a combination of a and b, a combination of a and c, a combination of b and c, or a combination of a, b, and c.

In various embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

The following describes embodiments of this application by using examples with reference to the accompanying drawings.

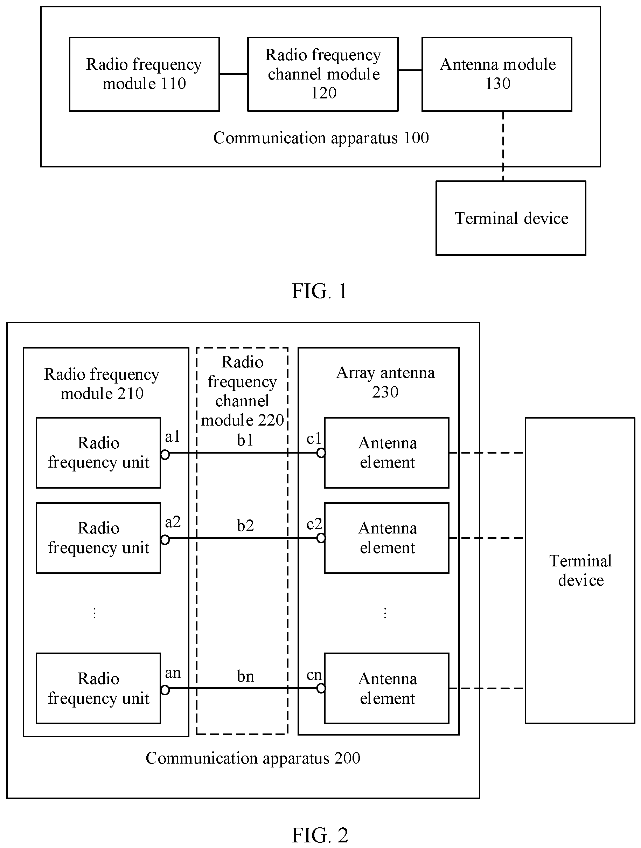

FIG. 1 is a diagram of a structure of a communication apparatus according to an embodiment of this application. As shown in FIG. 1, the communication apparatus 100 includes a radio frequency module 110, a radio frequency channel module 120, and an antenna module 130. The radio frequency module 110 may be communicatively connected to the antenna module 130 through the radio frequency channel module 120, and exchange a radio frequency signal with a terminal device through the antenna module 130.

To facilitate understanding of a radio frequency signal exchange process between the communication apparatus 100 and the terminal device, the following uses an example for description.

For example, the communication apparatus 100 may be a base station, and the base station may transmit a radio frequency signal to the terminal device. Specifically, the base station generates a radio frequency signal through the radio frequency module 110, and loads data information into the radio frequency signal in a process of generating the radio frequency signal. The data information may include audio information, video information, or the like sent by the base station to the terminal device. Further, the radio frequency module 110 transmits the generated radio frequency signal to the antenna module 130 through the radio frequency channel module 120. Then, the antenna module 130 may transmit the radio frequency signal to the terminal device through electromagnetic wave radiation, so that the mobile terminal device may obtain the corresponding data information based on the received radio frequency signal. The terminal device may be a device having an electromagnetic wave receiver, for example, a mobile phone, a television, an in-vehicle broadcast system, or a navigation system.

For example, when the communication apparatus is a base station, in addition to receiving the radio frequency signal transmitted by the base station, the terminal device may further generate and transmit a radio frequency signal to the antenna module 130 of the base station, and the radio frequency signal carries data information sent by the terminal device to the base station. Further, the antenna module 130 transmits the received radio frequency signal to the radio frequency module 110 through the radio frequency channel module 120. Then, the radio frequency module 110 may process the radio frequency signal to obtain the data information carried in the radio frequency signal. Alternatively, when the terminal device communicates with another terminal device through the base station, after processing the radio frequency signal, the radio frequency module 110 may transmit the radio frequency signal again through the radio frequency channel module 120 and the antenna module 130, to transmit the radio frequency signal to the another terminal device.

It may be understood that the communication apparatus 100 may alternatively be another apparatus having a signal transmitting function and a signal receiving function. Examples are not described one by one in embodiments of this application. In addition, descriptions of radio frequency signal exchange between the radio frequency module 110, the radio frequency channel module 120, and the antenna module 130 in the communication apparatus 100, and radio frequency signal exchange between the communication apparatus 100 and the terminal device are merely examples, and do not constitute a limitation on embodiments of this application.

It should be noted that, with development of communication technologies, to implement beamforming (Beam Forming, BF) of a radio frequency signal, multiple-input multiple-output (Multiple-Input Multiple-Output, MIMO) technology is widely applied to the communication apparatus. The MIMO technology means that a plurality of antennas are disposed in the communication apparatus, to simultaneously exchange a plurality of radio frequency signals with the terminal device through a plurality of channels corresponding to the plurality of antennas, including transmitting and receiving the plurality of radio frequency signals. The MIMO technology may improve spectrum utilization of the communication apparatus, and greatly increase a channel capacity. Further, the BF of the radio frequency signal means that the communication apparatus adjusts phase parameters of the plurality of antennas, so that radio frequency signals at some angles obtain constructive interference, and radio frequency signals at other angles obtain destructive interference, to obtain an expected signal radiation mode.

It may be understood that a function implemented by using the MIMO technology cannot be implemented by a single antenna. Therefore, the antenna module in the communication apparatus may be an array antenna. Specifically, the array antenna is an antenna system including many same single antennas arranged according to a specific rule, and a position of each antenna and a phase of a transmitted signal may be independently adjusted, so that the array antenna has a BF function.

To facilitate understanding of a specific process in which the communication apparatus performs multiple-input multiple-output of a radio frequency signal, that is, implements the MIMO technology, the following content in this embodiment of this application is described with reference to FIG. 2.

FIG. 2 is a diagram of another structure of a communication apparatus according to an embodiment of this application. Specifically, the communication apparatus 200 shown in FIG. 2 includes a radio frequency module 210, a radio frequency channel module 220, and an array antenna 230. The array antenna 230 includes N antenna elements (N is an integer greater than or equal to 1), and each antenna element includes one antenna interface. The radio frequency channel module 220 includes N radio frequency channels, and the N radio frequency channels are respectively connected to antenna interfaces of the N antenna elements. The radio frequency module 210 includes N radio frequency units, and the N radio frequency units are connected to the N radio frequency channels of the radio frequency channel module 220 through radio frequency interfaces. It can be learned that, in the communication apparatus 200, the N radio frequency interfaces in the radio frequency module 210 may exchange signals with the N antenna interfaces of the array antenna 230 through the N radio frequency channels.

For example, as shown in FIG. 2, a radio frequency interface a1 is connected to an antenna interface c1 through a radio frequency channel b1, in other words, the radio frequency interface a1 may exchange a signal with the antenna interface c1 through the radio frequency channel b1; a radio frequency interface a2 is connected to an antenna interface c2 through a radio frequency channel b2, in other words, the radio frequency interface a2 may exchange a signal with the antenna interface c2 through the radio frequency channel b2; and a radio frequency interface an is connected to an antenna interface cn through a radio frequency channel bn, in other words, the radio frequency interface an may exchange a signal with the antenna interface cn through the radio frequency channel bn.

It may be understood that, because the foregoing radio frequency interfaces and the corresponding antenna interfaces have independent radio frequency channels for signal exchange, different radio frequency channels do not interfere with each other. Therefore, the radio frequency module 210 may control each radio frequency interface to output a corresponding radio frequency signal, and transmit the radio frequency signal to each antenna interface through a radio frequency channel. Further, the array antenna 230 may transmit the radio frequency signal received by each antenna interface, so that the communication apparatus 200 transmits a plurality of radio frequency signals. In this case, the radio frequency signal is sent by the radio frequency module 210 to the array antenna 230, and is transmitted by the array antenna 230 to a terminal device. The radio frequency signal is a downlink signal.

Similarly, the communication apparatus 200 may receive a plurality of radio frequency signals through a plurality of antenna elements in the array antenna 230, and transmit the plurality of received radio frequency signals to a plurality of radio frequency interfaces of the radio frequency module 210 through a plurality of antenna interfaces and corresponding radio frequency channels. Because different radio frequency channels do not interfere with each other, the communication apparatus 200 may independently receive radio frequency signals of the radio frequency interfaces, so that the communication apparatus 200 receives the plurality of radio frequency signals. In this case, the radio frequency signal is sent by the array antenna 230 to the radio frequency module 210. The radio frequency signal is an uplink signal.

In some feasible implementations, when performing beamforming on the radio frequency signal, the communication apparatus 200 needs to independently control a phase of a radio frequency signal transmitted by each antenna element in the array antenna 230. Therefore, in the communication apparatus 200, a plurality of radio frequency units may be disposed in the radio frequency module 210, and each radio frequency unit is connected to a corresponding radio frequency interface. Then, the radio frequency module 210 independently controls each radio frequency unit to generate a corresponding radio frequency signal, so that a radio frequency interface of each radio frequency unit may output the corresponding radio frequency signal, and each antenna interface of the array antenna 230 receives the radio frequency signal transmitted through a radio frequency channel. It may be understood that, because radio frequency signals received by antenna interfaces are all generated by one corresponding radio frequency unit, the radio frequency signals received by the antenna interfaces may be signals with a same phase or different phases. In other words, the communication apparatus 200 may separately adjust phases of the radio frequency signals received by the antenna interfaces. Further, the array antenna 230 may transmit each radio frequency signal to the terminal device through each antenna element, to implement beamforming of the foregoing signal.

It should be noted that, because there is a structural difference between different radio frequency units, when the radio frequency module controls different radio frequency units to generate radio frequency signals, there is a phase difference between the radio frequency signals generated by the different radio frequency units; in other words, there is a phase difference between radio frequency signals sent by radio frequency interfaces of the radio frequency module.

For example, it is assumed that in the communication apparatus 200, the radio frequency module 210 controls a radio frequency unit connected to the radio frequency interface a1 and a radio frequency unit connected to the radio frequency interface a2 each to generate a radio frequency signal whose phase is w1. However, due to a structural difference, a radio frequency signal generated by the radio frequency unit connected to the radio frequency interface a1 has a phase difference Δw1, that is, a phase of the radio frequency signal generated by the radio frequency unit connected to the radio frequency interface a1 is w1+Δw1. A radio frequency signal generated by the radio frequency unit connected to the radio frequency interface a2 has a phase difference Δw2, that is, a phase of the radio frequency signal generated by the radio frequency unit connected to the radio frequency interface a2 is w1+Δw2. It can be learned that there is a phase difference between radio frequency signals generated by different radio frequency units. In this case, radio frequency signals sent by the radio frequency interface a1 and the radio frequency interface a2 have a phase difference.

It should be noted that, in addition to the structural difference between the foregoing different radio frequency units, there is also a structural difference between different radio frequency channels in the communication apparatus. Consequently, a phase difference is generated after a radio frequency signal is transmitted through different radio frequency channels.

For example, it is assumed that in the communication apparatus 200, phases of radio frequency signals output by the radio frequency interface a1 and the radio frequency interface a2 are both w2, the radio frequency signal output by the radio frequency interface a1 is transmitted to the antenna interface c1 through the radio frequency channel b1, and the radio frequency signal output by the radio frequency interface a2 is transmitted to the antenna interface c2 through the radio frequency channel b2. Because there is a structural difference between the radio frequency channel b1 and the radio frequency channel b2, a phase difference generated after the radio frequency signal is transmitted through the radio frequency channel b1 is Δw3, that is, a phase of the radio frequency signal received by the antenna interface c1 is w2+Δw1. In addition, a phase difference generated after the radio frequency signal is transmitted through the radio frequency channel b2 is Δw4, that is, a phase of the radio frequency signal received by the antenna interface c2 is w2+Δw4. It can be learned that phase differences generated by a radio frequency signal through different radio frequency channels are different. Similarly, when each antenna interface of the array antenna 230 transmits a radio frequency signal to each radio frequency interface through a corresponding radio frequency channel, the radio frequency signal received by each radio frequency interface also has a different phase difference due to a structural difference of the radio frequency channel.

It can be learned that, when a radio frequency signal is in downlink, a structural difference between different radio frequency units and a structural difference between different radio frequency channels in the radio frequency module both cause a phase difference of the radio frequency signal. When a radio frequency signal is in uplink, a structural difference between different radio frequency channels also causes a phase difference of the radio frequency signal. For ease of description, in the following content of this embodiment of this application, the phase difference of the radio frequency signal in downlink represents a phase difference generated by the radio frequency module (namely, different radio frequency units) and the radio frequency channel for the radio frequency signal when the radio frequency signal is generated by the radio frequency module and sent to the array antenna through the radio frequency channel; and the phase difference of the radio frequency signal in uplink represents a phase difference generated by the radio frequency channel for the radio frequency signal when the radio frequency signal is sent by the array antenna to the radio frequency module through the radio frequency channel.

It should be noted that, when performing beamforming on the radio frequency signal, the communication apparatus needs to independently control a phase of each radio frequency signal transmitted by the array antenna. The phase difference of the radio frequency signal in downlink leads to an inaccurate phase of the radio frequency signal transmitted by the communication apparatus. In addition, the phase difference of the radio frequency signal in uplink also affects processing of the radio frequency signal by the communication apparatus. Therefore, the communication apparatus needs to correct the phase differences of the radio frequency signal in uplink and downlink.

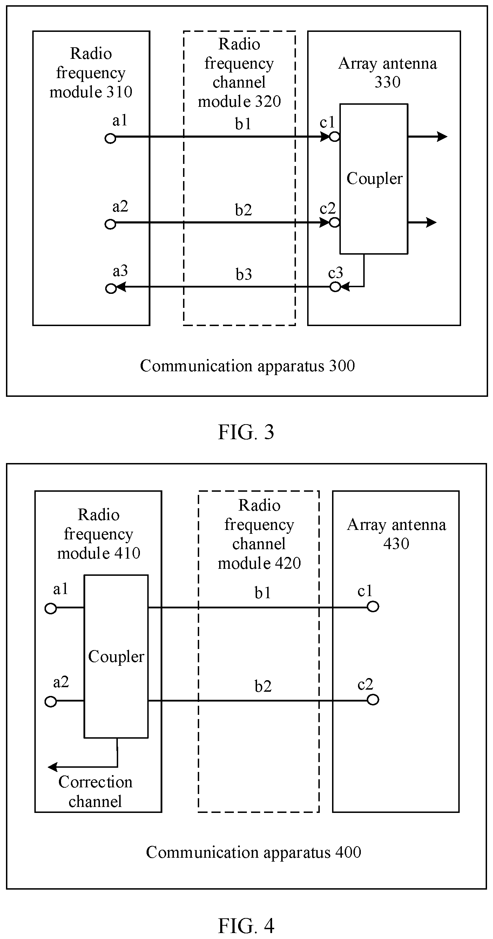

In some feasible implementations, a communication apparatus shown in FIG. 3 may correct a phase difference of a radio frequency signal in downlink. Specifically, FIG. 3 is a diagram of still another structure of a communication apparatus according to an embodiment of this application. The communication apparatus 300 shown in FIG. 3 includes a radio frequency module 310, a radio frequency channel module 320, and an array antenna 330. The radio frequency module 310 includes a radio frequency interface a1, a radio frequency interface a2, and a radio frequency interface a3. The radio frequency channel module 320 includes a radio frequency channel b1, a radio frequency channel b2, and a radio frequency channel b3. The array antenna 330 includes a coupler, an antenna interface c1, an antenna interface c2, and an antenna interface c3, where the coupler is connected to each antenna interface of the array antenna 330. It may be understood that the foregoing radio frequency interfaces are connected to the antenna interfaces through corresponding radio frequency channels. Details are not described herein in this application.

The communication apparatus 300 may use the radio frequency interface a3 and the antenna interface c3 as correction interfaces, and use the radio frequency channel b3 as a correction channel. Further, the communication apparatus 300 controls the radio frequency interface a1 and the radio frequency interface a2 to generate radio frequency signals. After being transmitted through radio frequency channels, the radio frequency signals are received by the antenna interface c1 and the antenna interface c2. It can be learned from the foregoing content that the radio frequency signals received by the antenna interface c1 and the antenna interface c2 have a phase difference.

To correct the phase difference of the radio frequency signal in downlink, the communication apparatus 300 couples, by using the coupler, the radio frequency signals received by the antenna interface c1 and the antenna interface c2, to obtain a first coupled signal corresponding to the antenna interface c1 and a second coupled signal corresponding to the antenna interface c2, and transmits the first coupled signal and the second coupled signal to the correction channel (the radio frequency channel b3) through the antenna interface c3. Then, the radio frequency interface a3 receives the first coupled signal and the second coupled signal. Because of coupling by the coupler, phases of the radio frequency signals do not change. To be specific, a phase of the first coupled signal is the same as a phase of the radio frequency signal received by the antenna interface c1, and a phase of the second coupled signal is the same as a phase of the radio frequency signal received by the antenna interface c2. Therefore, the communication apparatus 300 may determine, based on the phases of the received first coupled signal and second coupled signal, a phase difference between the radio frequency signals received by the antenna interface c1 and the antenna interface c2, to correct phases of the radio frequency signals in downlink, so that the phases of the radio frequency signals received by the antenna interface c1 and the antenna interface c2 are the same.

It can be learned from the foregoing content that the communication apparatus 300 needs to be provided with an additional radio frequency interface, radio frequency channel, and antenna interface, so that a radio frequency signal received by each antenna interface can be transmitted back to the radio frequency module for phase correction. Therefore, when the communication apparatus does not have an additional radio frequency interface, radio frequency channel, and antenna interface, a phase of the radio frequency signal received by each antenna interface cannot be corrected. In addition, using the radio frequency interface, the radio frequency channel, and the antenna interface in the communication apparatus for phase correction also reduces interface resource utilization.

In some feasible implementations, to correct a phase difference of a radio frequency signal in downlink when the communication apparatus does not have an additional radio frequency interface, radio frequency channel, and antenna interface, the communication apparatus 400 shown in FIG. 4 may perform phase correction by using a coupler inside a radio frequency module. Specifically, FIG. 4 is a diagram of still another structure of a communication apparatus according to an embodiment of this application. As shown in FIG. 4, the communication apparatus 400 includes a radio frequency module 410, a radio frequency channel module 420, and an array antenna 430. The radio frequency module 410 includes a coupler, a radio frequency interface a1, and a radio frequency interface a2. The radio frequency channel module 420 includes a radio frequency channel b1 and a radio frequency channel b2. The array antenna 430 includes an antenna interface c1 and an antenna interface c2. The coupler is connected to each radio frequency interface of the radio frequency module 410. It may be understood that the foregoing radio frequency interfaces are connected to the antenna interfaces through corresponding radio frequency channels. Details are not described herein in this application.

Further, the communication apparatus 300 may control the radio frequency interface a1 and the radio frequency interface a2 to separately output a radio frequency signal. It can be learned from the foregoing content that, due to a structural difference between radio frequency units, there is a phase difference between the radio frequency signals output by the radio frequency interface a1 and the radio frequency interface a2. Therefore, the radio frequency module 310 couples, by using the coupler, the radio frequency signal output by the radio frequency interface, to obtain a third coupled signal, and couples, by using the coupler, the radio frequency signal output by the radio frequency interface a2, to obtain a fourth coupled signal. Then, the third coupled signal and the fourth coupled signal are obtained through an internal correction channel, and the phase difference between the radio frequency signals sent by the radio frequency interface a1 and the radio frequency interface a2 is determined based on the third coupled signal and the fourth coupled signal.

However, it can be learned from the foregoing content that, in the communication apparatus, in addition to a phase difference between radio frequency signals sent by different radio frequency interfaces, there is also a phase difference generated after the radio frequency signals are transmitted through different radio frequency channels. However, the radio frequency module 410 in the communication apparatus 400 can only determine a phase difference of radio frequency signals sent by different radio frequency interfaces. Therefore, although the communication apparatus 400 does not need an additional radio frequency interface, radio frequency channel, and antenna interface for phase correction, the communication apparatus 400 cannot correct a phase difference generated between different radio frequency channels, resulting in low correction accuracy and poor applicability.

Based on the foregoing descriptions, to correct a phase difference of a radio frequency signal in downlink without occupying a radio frequency interface, a radio frequency channel, and an antenna interface in a communication apparatus for phase correction, an embodiment of this application provides a communication apparatus. The communication apparatus can implement phase correction of a radio frequency signal in downlink without an additional radio frequency interface, radio frequency channel, and antenna interface. The following describes the communication apparatus by using an example.

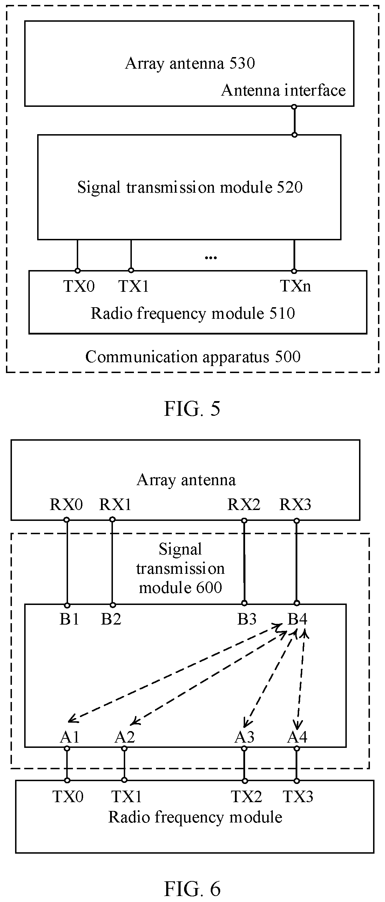

FIG. 5 is a diagram of still another structure of a communication apparatus according to an embodiment of this application. The communication apparatus 500 shown in FIG. 5 includes a radio frequency module 510, a signal transmission module 520, and an array antenna 530.

The radio frequency module 510 includes a plurality of radio frequency interfaces, and the plurality of radio frequency interfaces are connected to the signal transmission module 520. The signal transmission module 520 is further connected to at least one antenna interface. It should be explained that the at least one antenna interface may be understood as an interface that is in the array antenna 530 and that is configured to receive a radio frequency signal generated and transmitted by the radio frequency module 510. For ease of understanding, in the communication apparatus 500 shown in FIG. 5 in this embodiment of this application, an example in which the signal transmission module 520 is connected to one antenna interface of the array antenna 530 is used for brief description.

It may be understood that the signal transmission module 520 is connected to the radio frequency module 510 and the antenna interface of the array antenna 530, so that the radio frequency module 510 can exchange a signal with the array antenna 530 through the signal transmission module 520. Specifically, the radio frequency module 510 may control the plurality of radio frequency interfaces to send a first radio frequency signal, and transmit the first radio frequency signal to the signal transmission module 520 through the plurality of radio frequency interfaces. The first radio frequency signal may be understood as a radio frequency signal output by the plurality of radio frequency interfaces of the radio frequency module 510. Then, the signal transmission module 520 may transmit the received first radio frequency signal to the antenna interface of the array antenna 530.

It can be learned from the foregoing content that, when the radio frequency module 510 sends the first radio frequency signal to the array antenna 530 through the signal transmission module 520, the first radio frequency signal is a downlink radio frequency signal. In this case, the first radio frequency signal sent by the radio frequency module 510 through the plurality of radio frequency interfaces has a phase difference, and a phase difference is also generated after the first radio frequency signal is transmitted by the signal transmission module 520, that is, the first radio frequency signal in downlink has a phase difference. In this case, the first radio frequency signal that is sent by the plurality of radio frequency interfaces and received by the antenna interface of the array antenna 530 are not phase-aligned. To correct the phase difference of the first radio frequency signal in downlink, in this embodiment of this application, the communication apparatus 500 may adjust, based on a phase difference of the first radio frequency signal received by the antenna interface, a phase of a radio frequency signal sent by each radio frequency interface of the radio frequency module 510, so that radio frequency signals received by the array antenna 530 are phase-aligned, thereby completing phase correction of the radio frequency signal in downlink.

Specifically, after transmitting the first radio frequency signal to the antenna interface of the array antenna 530, the signal transmission module 520 may loop the first radio frequency signal back to the radio frequency module 510 at the antenna interface. Then, the radio frequency module 510 may correct, based on the looped-back first radio frequency signal, a phase of a signal sent by each radio frequency interface, to complete phase correction of the radio frequency signal in downlink.

It should be explained that, when the first radio frequency signal is transmitted by the signal transmission module 520 to the antenna interface, the first radio frequency signal is phase-aligned with the first radio frequency signal when the first radio frequency signal is received by the antenna interface. In other words, the communication apparatus 500 may use, as the first radio frequency signal received by the array antenna 530, the first radio frequency signal transmitted by the signal transmission module 520 to the antenna interface. Therefore, the communication apparatus 500 may reflect the first radio frequency signal at the antenna interface through the signal transmission module 520, to loop the first radio frequency signal back to the radio frequency module 510. Further, a phase difference of the looped-back first radio frequency signal may represent a phase difference of the first radio frequency signal received by the array antenna 530. Therefore, the radio frequency module 510 may determine, based on the looped-back first radio frequency signal, the phase difference of the first radio frequency signal received by the array antenna 530, to adjust, based on the phase difference of the first radio frequency signal received by the array antenna 530, the phase of the radio frequency signal sent by each radio frequency interface of the radio frequency module 510, so that radio frequency signals received by the array antenna 530 are phase-aligned, thereby completing phase correction of the radio frequency signal in downlink.

For example, the radio frequency module 510 shown in FIG. 5 includes a radio frequency interface TX0, a radio frequency interface TX1, and a radio frequency interface TXn, and the radio frequency interface TX0, the radio frequency interface TX1, and the radio frequency interface TXn are connected to the signal transmission module 520. Further, the radio frequency module 510 may control the radio frequency interface TX0, the radio frequency interface TX1, and the radio frequency interface TXn each to send a radio frequency signal. It may be understood that the radio frequency signal sent by each of the radio frequency interface TX0, the radio frequency interface TX1, and the radio frequency interface TXn is the first radio frequency signal. Further, the radio frequency signal sent by each radio frequency interface may be sent to the antenna interface through the signal transmission module 520. Then, the signal transmission module 520 may loop the radio frequency signal sent by each radio frequency interface, namely, the first radio frequency signal, back to the radio frequency module 510 at the antenna interface. The radio frequency module 510 corrects, based on the looped-back first radio frequency signal, phases of signals sent by the radio frequency interface TX0, the radio frequency interface TX1, and the radio frequency interface TXn. For example, it is assumed that in the looped-back first radio frequency signal, a phase difference between a radio frequency signal corresponding to the radio frequency interface TX0 and a radio frequency signal corresponding to the radio frequency interface TX1 is 10 degrees, and a phase difference between the radio frequency signal corresponding to the radio frequency interface TX0 and a radio frequency signal corresponding to the radio frequency interface TXn is 20 degrees. In the looped-back first radio frequency signal, the radio frequency signal corresponding to each radio frequency interface may be understood as a radio frequency signal obtained after a signal sent by each radio frequency interface is transmitted by the signal transmission module 520 and is looped back at the antenna interface.

Further, the radio frequency module 510 may adjust, based on the looped-back first radio frequency signal, phases of radio frequency signals sent by the radio frequency interface TX1 and the radio frequency interface TXn. Specifically, the radio frequency module 510 adjusts a phase difference between the signal sent by the radio frequency interface TX1 and the signal sent by the radio frequency interface TX0 to 10 degrees, and adjusts a phase difference between the signal sent by the radio frequency interface TXn and the signal sent by the radio frequency interface TX0 to 20 degrees, so that the radio frequency signals that are sent by the radio frequency interfaces and received by the array antenna 530 are phase-aligned. For a specific implementation process, refer to subsequent descriptions. Details are not described herein.

For ease of understanding, the following content first describes a specific implementation of a signal transmission module in this embodiment of this application.

In some feasible implementations, FIG. 6 is a diagram of a structure of a signal transmission module according to an embodiment of this application. The signal transmission module 600 shown in FIG. 6 includes a plurality of first transmission interfaces and a plurality of second transmission interfaces. Each of the plurality of first transmission interfaces is connected to one radio frequency interface of a radio frequency module, in other words, each first transmission interface is correspondingly connected to one radio frequency interface. Each of the plurality of second transmission interfaces is connected to one antenna interface of an array antenna, in other words, each second transmission interface is correspondingly connected to one antenna interface.

In the signal transmission module 600, each first transmission interface is interconnected with any one of the plurality of second transmission interfaces. Similarly, each second transmission interface is interconnected with any one of the plurality of first transmission interfaces. For ease of understanding, this embodiment of this application is briefly described by using an example in the following content.

For example, as shown in FIG. 6, it is assumed that the plurality of first transmission interfaces in the signal transmission module 600 include a first transmission interface A1, a first transmission interface A2, a first transmission interface A3, and a first transmission interface A4, and the plurality of second transmission interfaces include a second transmission interface B1, a second transmission interface B2, a second transmission interface B3, and a second transmission interface B4. The first transmission interface A1 is connected to a radio frequency interface TX0, the first transmission interface A2 is connected to a radio frequency interface TX1, the first transmission interface A3 is connected to a radio frequency interface TX2, and the first transmission interface A4 is connected to a radio frequency interface TX3. The second transmission interface B1 is connected to an antenna interface RX0, the second transmission interface B2 is connected to an antenna interface RX1, the second transmission interface B3 is connected to an antenna interface RX2, and the second transmission interface B4 is connected to an antenna interface RX3.

Further, the first transmission interface A1 is interconnected with the second transmission interface B1, the second transmission interface B2, the second transmission interface B3, and the second transmission interface B4. That the first transmission interface A1 is interconnected with the second transmission interface B4 means that when the first transmission interface A1 receives a radio frequency signal sent by the radio frequency interface TX0, the first transmission interface A1 may transmit the received radio frequency signal to the second transmission interface B4, and when the second transmission interface B4 receives a radio frequency signal sent by the antenna interface RX3, the second transmission interface B4 may transmit the radio frequency signal to the first transmission interface A1. Similarly, for descriptions of interconnection between the second transmission interface B4 and the first transmission interface A2, the first transmission interface A3, and the first transmission interface A4, refer to the foregoing content. Details are not described herein in this application.

In conclusion, that the second transmission interface B4 is interconnected with the first transmission interface A1, the first transmission interface A2, the first transmission interface A3, and the first transmission interface A4 means that the second transmission interface B4 may receive a radio frequency signal sent by each radio frequency interface. In addition, when receiving a radio frequency signal sent by an antenna interface, the second transmission interface B4 may send the radio frequency signal to the first transmission interface A1, the first transmission interface A2, the first transmission interface A3, and the first transmission interface A4.

Similarly, for descriptions of interconnection between another first transmission interface (for example, the first transmission interface A2, the first transmission interface A3, or the first transmission interface A4) and the second transmission interface B1, the second transmission interface B2, the second transmission interface B3, and the second transmission interface B4 in the signal transmission module 600, refer to the foregoing descriptions of the second transmission interface B4. Details are not described herein in this application.

It may be understood that, in this embodiment of this application, each first transmission interface in the signal transmission module 600 is interconnected with any one of the plurality of second transmission interfaces, and after receiving a radio frequency signal sent by a corresponding radio frequency interface, the first transmission interface may send the received radio frequency signal to the plurality of second transmission interfaces. Then, the plurality of second transmission interfaces may transmit the radio frequency signal transmitted by the first transmission interface to a corresponding antenna interface, to implement downlink of the radio frequency signal between the radio frequency module and the array antenna. Similarly, each second transmission interface in the signal transmission module 600 is interconnected with any one of the plurality of first transmission interfaces, and after receiving a radio frequency signal sent by a corresponding antenna interface, the second transmission interface may send the received radio frequency signal to the plurality of first transmission interfaces. Then, the plurality of first transmission interfaces may transmit the radio frequency signal transmitted by the second transmission interface to a corresponding radio frequency interface, to implement uplink of the radio frequency signal between the radio frequency module and the array antenna.

In some feasible implementations, the signal transmission module includes n1 first bridge circuits and n1 second bridge circuits. Each first bridge circuit includes n2 first transmission interfaces, and each second bridge circuit includes n2 second transmission interfaces. In other words, each first bridge circuit and each second bridge circuit include a same quantity of transmission interfaces. In addition, each first bridge circuit is connected to any one of the plurality of second bridge circuits. It should be noted that n1×n2 is equal to n. In other words, the signal transmission module includes n first transmission interfaces and n second transmission interfaces.

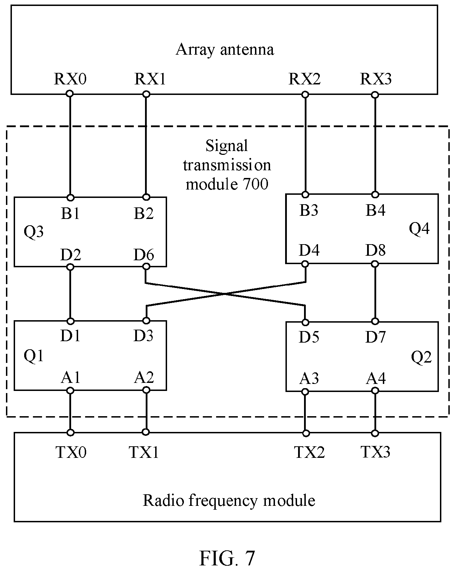

For example, FIG. 7 is a diagram of another structure of a signal transmission module according to an embodiment of this application. The signal transmission module 700 shown in FIG. 7 includes two first bridge circuits: a first bridge circuit Q1 and a first bridge circuit Q2, and further includes two second bridge circuits: a second bridge circuit Q3 and a second bridge circuit Q4. The first bridge circuit Q1 and the first bridge circuit Q2 each include two first transmission interfaces, and the second bridge circuit Q3 and the second bridge circuit Q4 each include two second transmission interfaces, that is, n1=2 and n2=2.

Further, the first bridge circuit Q1 is connected to an output interface D2 of the second bridge circuit Q3 through an output interface D1, and the first bridge circuit Q1 is further connected to an output interface D4 of the second bridge circuit Q3 through an output interface D3. The first bridge circuit Q2 is connected to an output interface D6 of the second bridge circuit Q3 through an output interface D5, and the first bridge circuit Q2 is further connected to an output interface D8 of the second bridge circuit Q3 through an output interface D7. It can be learned that, in the signal transmission module 700, each first bridge circuit is connected to each second bridge circuit through a corresponding output interface.

In the signal transmission module 700, a first transmission interface A1 of the first bridge circuit Q1 may receive a radio frequency signal sent by a radio frequency interface TX0, and transmit the radio frequency signal to the output interface D1 and the output interface D3. Then, because the output interface D1 of the first bridge circuit Q1 is connected to the output interface D2 of the second bridge circuit Q3, the first bridge circuit Q1 may send a radio frequency signal received by the output interface D1 to the output interface D2 of the second bridge circuit Q3. The output interface D2 of the second bridge circuit Q3 may transmit the received radio frequency signal to a second transmission interface B1 and a second transmission interface B2, and then transmit the radio frequency signal to an antenna interface RX0 and an antenna interface RX1.

Similarly, after receiving the radio frequency signal transmitted by the first transmission interface A1, the output interface D3 may send the radio frequency signal to the output interface D4 of the second bridge circuit Q4. Then, the output interface D4 of the second bridge circuit Q4 transmits the received radio frequency signal to a second transmission interface B3 and a second transmission interface B4, and then transmits the radio frequency signal to an antenna interface RX2 and an antenna interface RX3.

It can be learned that the signal transmission module 700 may transmit the radio frequency signal sent by the radio frequency interface TX0 to each antenna interface of the array antenna, to complete downlink of the radio frequency signal.

It may be understood that, for descriptions of transmitting, by the signal transmission module 700, a radio frequency signal sent by another radio frequency interface (for example, a radio frequency interface TX1, a radio frequency interface TX2, or a radio frequency interface TX3) of the radio frequency module to each antenna interface, refer to the foregoing content. Details are not described herein in this application.

In addition, the second transmission interface B1 of the second bridge circuit Q3 may receive a radio frequency signal sent by the antenna interface RX0, and transmit the radio frequency signal to the output interface D2 and the output interface D6. Then, because the output interface D2 of the second bridge circuit Q3 is connected to the output interface D1 of the first bridge circuit Q1, the second bridge circuit Q3 may send the radio frequency signal received by the output interface D2 to the output interface D1 of the first bridge circuit Q1. The output interface D1 of the first bridge circuit Q1 may transmit the received radio frequency signal to the first transmission interface A1 and a first transmission interface A2, and then transmit the radio frequency signal sent by the antenna interface RX0 to the radio frequency interface TX0 and the radio frequency interface TX1.

Similarly, after receiving the radio frequency signal transmitted by the second transmission interface B1, the output interface D6 may send the radio frequency signal to the output interface D5 of the first bridge circuit Q2. Then, the output interface D5 of the first bridge circuit Q2 transmits the received radio frequency signal to a first transmission interface A3 and a first transmission interface A4, and then transmit the radio frequency signal sent by the antenna interface RX0 to the radio frequency interface TX2 and the radio frequency interface TX3.

It can be learned that the signal transmission module 700 may transmit the radio frequency signal sent by the antenna interface RX0 to each radio frequency interface of the radio frequency module, to complete uplink of the radio frequency signal.

It may be understood that, for descriptions of transmitting, by the signal transmission module 700, a radio frequency signal sent by another antenna interface (for example, the antenna interface RX1, the antenna interface RX2, or the antenna interface RX3) of the array antenna to each radio frequency interface, refer to the foregoing content. Details are not described herein in this application.

In some feasible implementations, the first bridge circuit or the second bridge circuit may be a bridge circuit that includes a resistor and that has two input interfaces and two output interfaces. For example, each bridge circuit includes a first interface, a second interface, a third interface, and a fourth interface. It should be noted that two of the first interface, the second interface, the third interface, and the fourth interface are configured to input a signal, and the other two interfaces are configured to output a signal. For example, the second interface and the third interface of the bridge circuit may be used as the first transmission interface A1 and the first transmission interface A2 of the first bridge circuit Q1 in FIG. 7, and are configured to receive a radio frequency signal sent by a radio frequency interface. In this case, the first interface and the fourth interface of the bridge circuit may be used as the output interface D1 and the output interface D6 of the first bridge circuit Q1, and are configured to output the radio frequency signal to a corresponding second bridge circuit. It may be understood that this is merely an example, and does not constitute a limitation on embodiments of this application.

In some feasible implementations, when a quantity of radio frequency interfaces and a quantity of antenna interfaces are an even number, a first bridge circuit connected to the radio frequency interface and a second bridge circuit connected to the antenna interface may be added to the signal transmission module, so that each radio frequency interface of the radio frequency module may send a radio frequency signal to each antenna interface through the signal transmission module, and each antenna interface of the array antenna may send a radio frequency signal to each radio frequency interface through the signal transmission module. For example, it is assumed that the quantity of radio frequency interfaces and the quantity of antenna interfaces are 8, and a quantity of output interfaces of the first bridge circuit and a quantity of output interfaces of the second bridge circuit are 2. In this case, the signal transmission module may be provided with 4 first bridge circuits and 4 second bridge circuits, and a quantity of first transmission interfaces is 2×4=8, that is, each radio frequency interface may be correspondingly connected to one first transmission interface. Similarly, a quantity of second transmission interfaces is 2×4=8, that is, each antenna interface may be correspondingly connected to one second transmission interface.

In some feasible implementations, when a quantity of radio frequency interfaces and a quantity of antenna interfaces are an odd number, a first bridge circuit connected to the radio frequency interface and a second bridge circuit connected to the antenna interface may be added to the signal transmission module, so that each radio frequency interface of the radio frequency module may send a radio frequency signal to each antenna interface through the signal transmission module, and each antenna interface of the array antenna may send a radio frequency signal to each radio frequency interface through the signal transmission module. For example, it is assumed that the quantity of radio frequency interfaces and the quantity of antenna interfaces are 7, and a quantity of output interfaces of the first bridge circuit and a quantity of output interfaces of the second bridge circuit are 2. In this case, the signal transmission module may be provided with 4 first bridge circuits and 4 second bridge circuits. In this case, a quantity of first transmission interfaces is 2×4=8, and a quantity of second transmission interfaces is 2×4=8. Further, each of the seven radio frequency interfaces of the radio frequency module may be connected to one first transmission interface, and a redundant first transmission interface may be used as an idle interface. In addition, each of the seven antenna interfaces of the array antenna may be connected to one second transmission interface, and a redundant second transmission interface may be used as an idle interface.

In some feasible implementations, the signal transmission module in this embodiment of this application further includes a first switch. It can be learned from the foregoing content that the signal transmission module includes a plurality of first transmission interfaces and a plurality of second transmission interfaces. The first switch is disposed between a first antenna interface and a second transmission interface correspondingly connected to the first antenna interface, and the first antenna interface is any one of at least one antenna interface of the array antenna. In other words, one end of the first switch is connected to any antenna interface of the array antenna, and the other end is connected to the second transmission interface correspondingly connected to the antenna interface.

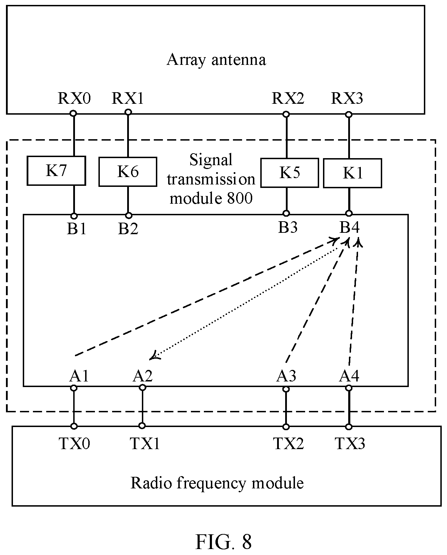

For example, FIG. 8 is a diagram of still another structure of a signal transmission module according to an embodiment of this application. The signal transmission module 800 shown in FIG. 8 includes a plurality of first transmission interfaces, a plurality of second transmission interfaces, and a first switch K1. A first transmission interface A1 is connected to a radio frequency interface TX0, a first transmission interface A2 is connected to a radio frequency interface TX1, a first transmission interface A3 is connected to a radio frequency interface TX2, and a first transmission interface A4 is connected to a radio frequency interface TX3. A second transmission interface B1 is connected to an antenna interface RX0, a second transmission interface B2 is connected to an antenna interface RX1, a second transmission interface B3 is connected to an antenna interface RX2, and a second transmission interface B4 is connected to an antenna interface RX3 through the first switch K1. It should be noted that, that the first switch K1 shown in FIG. 8 is disposed between the second transmission interface B4 and the antenna interface RX3 is merely used as an example. The first switch K1 may alternatively be disposed between another second transmission interface and a corresponding antenna interface. This is not limited in this application.

It should be noted that the first switch K1 may be turned off or turned on under control of a radio frequency module. When the first switch K1 is turned on, the second transmission interface B4 is connected to the antenna interface RX3. In this case, when the second transmission interface B4 receives a radio frequency signal transmitted by any first transmission interface, the second transmission interface B4 may send the received radio frequency signal to the antenna interface RX3 through the turned-on first switch K1. Similarly, when the antenna interface RX3 sends a radio frequency signal, the radio frequency signal may be sent to the second transmission interface B4 through the turned-on first switch K1. In other words, when the first switch K1 is turned on, the second transmission interface B4 may be interconnected with the antenna interface RX3.

When the first switch K1 is turned off, the second transmission interface B4 is disconnected from the antenna interface RX3. In this case, when the second transmission interface B4 receives a radio frequency signal transmitted by any first transmission interface, the second transmission interface B4 may send the received radio frequency signal to the antenna interface RX3. However, because the first switch K1 is turned off at this time, the radio frequency signal cannot be transmitted to the antenna interface RX3. Further, when the radio frequency signal sent by the second transmission interface B4 is transmitted to the first switch K1, the turned-off first switch K1 reflects the radio frequency signal, so that the radio frequency signal is transmitted back to the second transmission interface B4. It can be learned from the foregoing content that the second transmission interface B4 is interconnected with each first transmission interface. Therefore, the second transmission interface B4 may transmit the reflected radio frequency signal to each first transmission interface, to send the reflected radio frequency signal to each radio frequency interface of the radio frequency module through each first transmission interface. It can be learned that, when the first switch K1 is turned off, the first switch K1 may intercept the radio frequency signal sent by the second transmission interface B4 to the antenna interface RX3, and reflect the radio frequency signal back to the second transmission interface B4, so that the radio frequency signal is looped back to the radio frequency module at the antenna interface RX3.

For example, it is assumed that the first switch is a thyristor, a transistor, a field effect transistor, or a silicon controlled thyristor. In this case, the radio frequency module may provide a turn-on voltage for the first switch, so that the first switch can be turned on. In addition, the radio frequency module may provide a turn-off voltage for the first switch, so that the first switch is turned off.

Alternatively, for example, it is assumed that the first switch is a relay. In this case, the radio frequency module may energize an electromagnet, to draw down an armature to close a working circuit, that is, turn on the first switch. In addition, the electromagnet may be controlled to be powered off, so that the electromagnet loses magnetism, and a spring pulls up the armature to cut off the working circuit, that is, turn off the first switch.

It may be understood that the foregoing descriptions are merely examples, and do not constitute a limitation on embodiments of this application. A specific form and a turn-on/off control manner of the first switch are not limited in embodiments of this application.

For example, the radio frequency module shown in FIG. 8 controls the first switch K1 to be turned off.

In some feasible implementations, the signal transmission module may include a plurality of first switches. Each first switch may be disposed between any second transmission interface and an antenna interface correspondingly connected to the second transmission interface. For example, it is assumed that the signal transmission module 800 includes four first switches: the first switch K1, a first switch K5, a first switch K6, and a first switch K7. In this case, the first switch K1 may be disposed between the second transmission interface B4 and the antenna interface RX3, the first switch K5 may be disposed between the second transmission interface B3 and the antenna interface RX2, the first switch K6 may be disposed between the second transmission interface B2 and the antenna interface RX1, and the first switch K7 may be disposed between the second transmission interface B1 and the antenna interface RX0.

For example, the turned-off first switch K1 may reflect, back to the second transmission interface B4, a first radio frequency signal sent by the second transmission interface B4 to the antenna interface RX3, so that the first radio frequency signal sent by each radio frequency interface is looped back to the radio frequency module at the antenna interface RX3. Similarly, the turned-off first switch K5 may reflect, back to the second transmission interface B3, a first radio frequency signal sent by the second transmission interface B3 to the antenna interface RX2, so that the first radio frequency signal sent by each radio frequency interface is looped back to the radio frequency module at the antenna interface RX2. Similarly, the turned-off first switch K6 may reflect, back to the second transmission interface B2, a first radio frequency signal sent by the second transmission interface B2 to the antenna interface RX1, so that the first radio frequency signal sent by each radio frequency interface is looped back to the radio frequency module at the antenna interface RX1. Similarly, the turned-off first switch K7 may reflect, back to the second transmission interface B1, a first radio frequency signal sent by the second transmission interface B1 to the antenna interface RX0, so that the first radio frequency signal sent by each radio frequency interface is looped back to the radio frequency module at the antenna interface RX0. In general, the first switch disposed at each antenna interface may reflect, when being turned off, the radio frequency signal sent to the antenna interface. It may be understood that for a specific implementation of each first switch being turned on or off, refer to the foregoing content. A quantity of first switches in the signal transmission module may be adjusted based on an actual situation. This is not limited herein in this application.

In some feasible implementations, a communication apparatus in this embodiment of this application may loop the first radio frequency signal sent by the plurality of radio frequency interfaces back to the radio frequency module at the antenna interface through the signal transmission module 800 shown in FIG. 8, so that the radio frequency module may correct, based on the looped-back first radio frequency signal, a phase of a signal sent by each radio frequency interface.

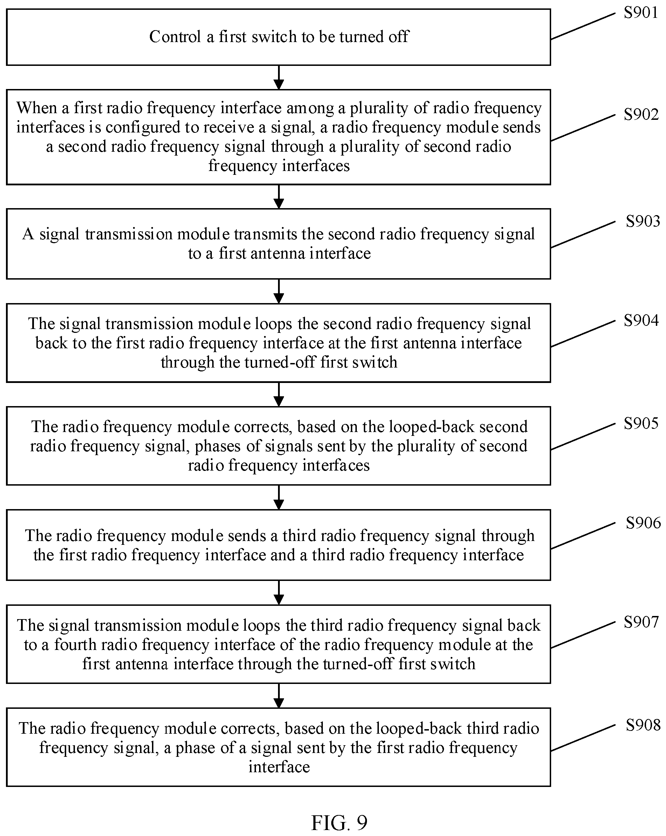

To facilitate understanding of a phase correction procedure of the communication apparatus, the following provides an example description with reference to FIG. 9. The phase correction procedure includes but is not limited to the following steps.

S901: Control a first switch to be turned off.

It can be learned from the foregoing content that a signal transmission module may reflect, through the turned-off first switch, a radio frequency signal sent by a second transmission interface connected to the first switch, and loop the reflected radio frequency signal back to each radio frequency interface of a radio frequency module. Therefore, before sending the radio frequency signal, the radio frequency module may first control the first switch to be turned off, so that the radio frequency module can perform phase correction based on the looped-back radio frequency signal.

It should be noted that, when the signal transmission module includes a plurality of first switches, specific implementations of the first switches are the same. For ease of description, this embodiment of this application is described herein by using an example in which the signal transmission module includes one first switch. In addition, the first switch is disposed between a first antenna interface and a second transmission interface correspondingly connected to the first antenna interface. The first antenna interface is any one of a plurality of antenna interfaces of an array antenna.

S902: When a first radio frequency interface among a plurality of radio frequency interfaces is configured to receive a signal, the radio frequency module sends a second radio frequency signal through a plurality of second radio frequency interfaces.

After the radio frequency module controls the first switch to be turned off, the radio frequency module may determine any one of the plurality of radio frequency interfaces as the first radio frequency interface, and determine remaining radio frequency interfaces other than the first radio frequency interface among the plurality of radio frequency interfaces as the plurality of second radio frequency interfaces. Further, the radio frequency module controls the plurality of second radio frequency interfaces to send the second radio frequency signal, and controls the first radio frequency interface to receive the signal. The second radio frequency signal may be understood as a plurality of radio frequency signals respectively sent by the plurality of second radio frequency interfaces.

For example, the radio frequency module shown in FIG. 8 may determine the radio frequency interface TX1 as the first radio frequency interface, where the radio frequency interface TX1 is configured to receive a signal; and determine the radio frequency interface TX0, the radio frequency interface TX2, and the radio frequency interface TX3 as second radio frequency interfaces, where the radio frequency interface TX0, the radio frequency interface TX2, and the radio frequency interface TX3 are configured to send the second radio frequency signal. The second radio frequency signal may be understood as including a radio frequency signal sent by the radio frequency interface TX0, a radio frequency signal sent by the radio frequency interface TX2, and a radio frequency signal sent by the radio frequency interface TX3.

S903: The signal transmission module transmits the second radio frequency signal to the first antenna interface.

It can be learned from the foregoing content that in the signal transmission module, each first transmission interface is interconnected with each second transmission interface. Therefore, the second radio frequency signal sent by the plurality of second radio frequency interfaces may be transmitted to each second transmission interface in the signal transmission module through the plurality of first transmission interfaces connected to the plurality of second radio frequency interfaces. Then, each second transmission interface may transmit the received second radio frequency signal to a corresponding antenna interface. However, the turned-off first switch is disposed between the first antenna interface and the corresponding second transmission interface that are in the signal transmission module, and the turned-off first switch may reflect the second radio frequency signal. Second radio frequency signals sent by other second transmission interfaces to corresponding antenna interfaces are not reflected. Therefore, specific implementations of the second transmission interfaces other than the second transmission interface corresponding to the first antenna interface are not discussed herein in this embodiment of this application.

It may be understood that after receiving the second radio frequency signal, the plurality of first transmission interfaces in the signal transmission module may transmit the second radio frequency signal to the first antenna interface through the second transmission interfaces.

For example, the signal transmission module shown in FIG. 8 transmits, through the first transmission interface A1 to the second transmission interface B4, a radio frequency signal sent by the radio frequency interface TX0, transmits, through the first transmission interface A3 to the second transmission interface B4, a radio frequency signal sent by the radio frequency interface TX2, and transmits, through the first transmission interface A4 to the second transmission interface B4, a radio frequency signal sent by the radio frequency interface TX3. Then, the second transmission interface B4 may send, to the first antenna interface, a radio frequency signal sent by each second radio frequency interface.

S904: The signal transmission module loops back the second radio frequency signal to the first radio frequency interface at the first antenna interface through the turned-off first switch.

It may be understood that, because the first switch is turned off, when the second radio frequency signal is transmitted to the first antenna interface, the second radio frequency signal is reflected back by the turned-off first switch to the second transmission interface in the signal transmission module. Further, the signal transmission module may loop the reflected second radio frequency signal back to the first radio frequency interface.

It should be noted that, in a process in which the signal transmission module loops back the second radio frequency signal, in the signal transmission module, each second transmission interface is interconnected with each first transmission interface. In this case, the second radio frequency signal is actually looped back to each radio frequency interface through each first transmission interface. However, when sending the second radio frequency signal, the plurality of second radio frequency interfaces also receive the looped-back second radio frequency signal. Consequently, the signal received by the plurality of second radio frequency interfaces has large noise, and signal-to-noise ratios of the plurality of second radio frequency interfaces are low. Therefore, a specific implementation of the looped-back second radio frequency signal received by the plurality of second radio frequency interfaces is not discussed herein in this embodiment of this application. In contrast, the radio frequency module uses the first radio frequency interface as a radio frequency interface for receiving a signal. Therefore, the first radio frequency interface has a high signal-to-noise ratio, and the received looped-back second radio frequency signal is accurate.

For example, when the first switch K1 shown in FIG. 8 is turned off, the second radio frequency signal transmitted by the second transmission interface B4 may be reflected back to the second transmission interface B4. Then, the second transmission interface B4 may loop the reflected second radio frequency signal back to the first radio frequency interface TX1 through the interconnected first transmission interface A2.

S905: The radio frequency module corrects, based on the looped-back second radio frequency signal, phases of signals sent by the plurality of second radio frequency interfaces.

It can be learned from the foregoing content that a phase difference of the looped-back second radio frequency signal may be understood as a phase difference between the signals sent by the plurality of second radio frequency interfaces in downlink. Therefore, to correct a phase difference of the signal sent by the second radio frequency interface in downlink, the radio frequency module may determine, based on the looped-back second radio frequency signal, a phase difference between the signals sent by the plurality of second radio frequency interfaces in downlink, and correct, based on the phase difference, the phases of the signals sent by the plurality of second radio frequency interfaces. This ensure that the signals sent by the plurality of second radio frequency interfaces in downlink are phase-aligned.

It should be noted that, to enable the radio frequency module to distinguish, when receiving the looped-back second radio frequency signal, between radio frequency signals that are sent by different radio frequency interfaces and that are looped back in the second radio frequency signal, the radio frequency module may adjust a frequency, an amplitude, or the like of a radio frequency signal sent by each of the plurality of second radio frequency interfaces to be different from that of a radio frequency signal sent by another second radio frequency interface. It may be understood that, after the second radio frequency signal is looped back by the signal transmission module, a frequency or an amplitude of a radio frequency signal corresponding to each second radio frequency interface in the second radio frequency signal remains unchanged. Therefore, the radio frequency module may distinguish, based on a frequency or an amplitude of a signal in the second radio frequency signal, between radio frequency signals corresponding to different second radio frequency interfaces, thereby determining a phase difference between signals sent by the plurality of second radio frequency interfaces in downlink.

For example, the radio frequency module shown in FIG. 8 controls the radio frequency signal sent by the radio frequency interface TX0 to transmit at frequency f1, the radio frequency signal sent by the radio frequency interface TX2 to transmit at frequency f2, and the radio frequency signal sent by the radio frequency interface TX3 to transmit at frequency f3. After the radio frequency interface TX1 (the first radio frequency interface) receives the looped-back second radio frequency signal, the radio frequency module may determine, in the looped-back second radio frequency signal, a radio frequency signal at frequency f1 as the radio frequency signal corresponding to the radio frequency interface TX0, a radio frequency signal at frequency f2 as the radio frequency signal corresponding to the radio frequency interface TX2, and a radio frequency signal at frequency f3 as the radio frequency signal corresponding to the radio frequency interface TX3, thereby distinguishing between the radio frequency signals in the second radio frequency signal.

After determining radio frequency signals corresponding to the second radio frequency interfaces, the radio frequency module may use a radio frequency signal corresponding to one of the second radio frequency interfaces as a standard radio frequency signal, and obtain a phase difference between the plurality of radio frequency signals corresponding to the plurality of second radio frequency interfaces. For example, it is assumed that the radio frequency module may use the radio frequency signal corresponding to the radio frequency interface TX0 as the standard radio frequency signal. In this case, in the looped-back second radio frequency signal, a phase difference between the radio frequency signal at frequency f1 (the radio frequency signal corresponding to the radio frequency interface TX0) and the radio frequency signal at frequency f2 (the radio frequency signal corresponding to the radio frequency interface TX2) is +10 degrees, and a phase difference between the radio frequency signal at frequency f1 and the radio frequency signal at frequency f3 (the radio frequency signal corresponding to the radio frequency interface TX3) is - 20 degrees.

It should be noted that, when the radio frequency module exchanges a radio frequency signal with the array antenna, each radio frequency interface interacts with a corresponding antenna interface. For example, the radio frequency interface TX0 shown in FIG. 8 sends a radio frequency signal to the antenna interface RX0 through the first transmission interface A1 and the second transmission interface B1. During the phase correction, the radio frequency signal sent by the radio frequency interface TX0 is transmitted to the second transmission interface B4 through the first transmission interface A1. In other words, a transmission path of the radio frequency signal when a communication apparatus performs phase correction is different from a transmission path of the radio frequency signal when the communication apparatus exchanges the radio frequency signal. The transmission path may be understood as a path on which transmission is performed from one first transmission interface to one second transmission interface in the signal transmission module. It can be learned from the foregoing content that phase differences generated after a radio frequency signal is transmitted through different radio frequency channels (namely, the transmission paths) are different. In other words, when the communication apparatus performs phase correction, a phase difference of the obtained looped-back radio frequency signal is not necessarily the same as a phase difference during radio frequency signal exchange.

It may be understood that, when transmission interfaces (namely, the first transmission interface and the second transmission interface) in the signal transmission module are always connected to the radio frequency module and the array antenna, a phase difference between different transmission paths is also fixed. Therefore, the radio frequency module may pre-obtain the phase difference between the different transmission paths before performing phase correction, and then determine, during phase correction based on the phase difference of the looped-back second radio frequency signal and the phase difference between the different transmission paths, a phase difference between signals sent by different radio frequency interfaces when the radio frequency module exchanges a radio frequency signal.

For example, it is assumed that in the signal transmission module 800, a phase difference of -5 degrees is generated when the radio frequency signal is transmitted from the first transmission interface A1 to the second transmission interface B1, and a phase difference of -10 degrees is generated when the radio frequency signal is transmitted from the first transmission interface A1 to the second transmission interface B4. In addition, a phase difference of -6 degrees is generated when the radio frequency signal is transmitted from the first transmission interface A3 to the second transmission interface B3, and a phase difference of -8 degrees is generated when the radio frequency signal is transmitted from the first transmission interface A3 to the second transmission interface B4.

It can be learned that, during radio frequency signal exchange, the phase difference generated when the radio frequency signal is transmitted from the first transmission interface A1 to the second transmission interface B1 lags 1 degree behind the phase difference generated when the radio frequency signal is transmitted from the first transmission interface A3 to the second transmission interface B3, where (-5+4)=-1. In other words, when the radio frequency signals sent by the radio frequency interface TX0 and the radio frequency interface TX2 are phase-aligned, a phase difference between radio frequency signals received by the antenna interface RX0 and the antenna interface RX2 is -1 degree.

In addition, during the phase correction, the phase difference generated when the radio frequency signal is transmitted from the first transmission interface A1 to the second transmission interface B4 lags 2 degrees behind the phase difference generated when the radio frequency signal is transmitted from the first transmission interface A3 to the second transmission interface B4, where (-10+8)=-2. In other words, when the radio frequency signals sent by the radio frequency interface TX0 and the radio frequency interface TX2 are phase-aligned, a phase difference between radio frequency signals received by the antenna interface RX3 is -2 degrees.

Therefore, during the phase correction, if in the radio frequency signals that are looped back, a phase difference of the radio frequency signal corresponding to the radio frequency interface TX0 is 10 degrees (namely, +10 degrees) ahead of a phase difference of the radio frequency signal corresponding to the radio frequency interface TX2, the radio frequency module may determine, based on the foregoing pre-obtained phase difference of -2 degrees between the different transmission paths, that a phase difference between the radio frequency signal sent by the radio frequency interface TX0 and the radio frequency signal sent by the radio frequency interface TX2 is +10-(-2)=+12 degrees, that is, a phase of the signal sent by the radio frequency interface TX0 is 12 degrees ahead of a phase of the signal sent by the radio frequency interface TX0.

Further, it can be learned from the foregoing content that, during radio frequency signal exchange, the phase difference generated when the radio frequency signal is transmitted from the first transmission interface A1 to the second transmission interface B1 lags 1 degree behind the phase difference generated when the radio frequency signal is transmitted from the first transmission interface A3 to the second transmission interface B3. In addition, the phase of the signal sent by the radio frequency interface TX0 is 12 degrees ahead of the phase of the signal sent by the radio frequency interface TX2. In this case, the radio frequency module may determine that during radio frequency signal exchange, a phase difference between the radio frequency signal that is sent by the radio frequency interface TX0 and transmitted from the first transmission interface A1 to the second transmission interface B1 and the radio frequency signal that is sent by the radio frequency interface TX2 and transmitted from the first transmission interface A3 to the second transmission interface B3 is (12-1)=+11 degrees, that is, a phase of the radio frequency signal received by the antenna interface RX0 is 11 degrees ahead of a phase of the radio frequency signal received by the antenna interface.

Therefore, the radio frequency module may control, based on the phase difference of +11 degrees during radio frequency signal exchange, the phase of the radio frequency signal sent by the radio frequency interface RX2 to be 11 degrees ahead of the phase of the radio frequency signal sent by the radio frequency interface RX0, so that the phase of the radio frequency signal received by the antenna interface RX0 and the phase of the radio frequency signal received by the antenna interface satisfy the following: +11-11=0, that is, a phase difference is 0, achieving phase alignment.

Similarly, the radio frequency module may determine, based on the foregoing content, a phase difference between the radio frequency signal sent by the radio frequency interface TX0 and the radio frequency signal sent by the radio frequency interface TX3, to control, based on the phase difference, a phase of the radio frequency signal sent by the radio frequency interface TX3, and then correct phases of the signals sent by the radio frequency interface TX0 and the radio frequency interface TX3.

It may be understood that, after the foregoing correction, the radio frequency signals that are sent by the radio frequency interface TX0, the radio frequency interface TX2, and the radio frequency interface TX3 and received by the array antenna are phase-aligned. In this case, the radio frequency module implements phase correction on the radio frequency interface TX0, the radio frequency interface, and the radio frequency interface TX3.

It can be learned that the radio frequency module controls the plurality of second radio frequency interfaces to send the second radio frequency signal, and receives, through the first radio frequency interface, the second radio frequency signal that is looped back by the signal transmission module, so as to correct, based on the looped-back second radio frequency signal, phases of radio frequency signals sent by the plurality of second radio frequency interfaces.

S906: The radio frequency module sends a third radio frequency signal through the first radio frequency interface and a third radio frequency interface.

It can be learned from the foregoing content that the radio frequency module may correct, based on the second radio frequency signal that is looped back by the signal transmission module, the phases of the radio frequency signals sent by the plurality of second radio frequency interfaces. However, the first radio frequency interface of the radio frequency module is only configured to receive the looped-back second radio frequency signal, and is not configured to send a radio frequency signal. Therefore, the radio frequency module cannot determine a phase difference of the radio frequency signal sent by the first radio frequency interface in downlink. Therefore, after correcting the phases of the radio frequency signals sent by the plurality of second radio frequency interfaces, the radio frequency module may further correct the first radio frequency interface through second phase correction, to perform phase correction on each of the plurality of radio frequency interfaces.

Specifically, after performing phase correction on the plurality of second radio frequency interfaces, the radio frequency module may use, as the third radio frequency interface, any second radio frequency interface among the plurality of second radio frequency interfaces on which the correction is completed. Then, the radio frequency module may adjust the radio frequency signal sent by the first radio frequency interface in downlink to be phase-aligned with a radio frequency signal sent by the third radio frequency interface in downlink, to complete phase correction on the first radio frequency interface.

For example, after completing phase correction on the radio frequency interface TX0, the radio frequency interface TX2, and the radio frequency interface TX3, the radio frequency module shown in FIG. 8 may determine the radio frequency interface TX0 as the third radio frequency interface. Alternatively, the radio frequency module may determine the radio frequency interface TX2 or the radio frequency interface TX3 as the third radio frequency interface. This is not limited in embodiments of this application.

Further, the radio frequency module may control the radio frequency interface TX1 (namely, the first radio frequency interface) and the radio frequency interface TX0 (the third radio frequency interface) to send the third radio frequency signal. The third radio frequency signal may be understood as including a radio frequency signal sent by the radio frequency interface TX1 and a radio frequency signal sent by the third radio frequency interface TX0. It can be learned from the foregoing content that, to distinguish between radio frequency signals sent by different radio frequency interfaces, the radio frequency module may adjust frequencies or amplitudes of radio frequency signals sent by the radio frequency interfaces to be different. For example, the radio frequency module may control a frequency of the radio frequency signal sent by the radio frequency interface TX1 to be f4, and control a frequency of the radio frequency signal sent by the radio frequency interface TX0 to be f5.

S907: The signal transmission module loops back the third radio frequency signal to a fourth radio frequency interface of the radio frequency module at the first antenna interface through the turned-off first switch.

It may be understood that the turned-off first switch may reflect the third radio frequency signal transmitted from the second transmission interface to the first antenna interface, so that the signal transmission module may receive the reflected third radio frequency signal, and loop the reflected third radio frequency signal back to the fourth radio frequency interface of the radio frequency module. The fourth radio frequency interface is any radio frequency interface other than the third radio frequency interface among the plurality of corrected second radio frequency interfaces. It may be understood that the fourth radio frequency interface is a radio frequency interface on which phase correction is performed by the radio frequency module.

For example, when determining the radio frequency interface TX0 as the third radio frequency interface, the radio frequency module shown in FIG. 8 may determine the radio frequency interface TX2 or the radio frequency interface TX3 as the fourth radio frequency interface. This is not limited in this application.

Similarly, for a specific implementation in which the signal transmission module loops back the third radio frequency signal to the fourth radio frequency interface, refer to step S904 in which the signal transmission module loops back the second radio frequency signal to the first radio frequency interface. Details are not described herein in embodiments of this application.

S908: The radio frequency module corrects, based on the looped-back third radio frequency signal, a phase of a signal sent by the first radio frequency interface.

Similarly, the radio frequency module may correct, based on a phase difference between a radio frequency signal corresponding to the first radio frequency interface and a radio frequency signal corresponding to the second radio frequency interface in the looped-back third radio frequency signal, the phase of the radio frequency signal sent by the first radio frequency interface, so that the radio frequency signal sent by the first radio frequency interface in downlink is phase-aligned with the radio frequency signal sent by the third radio frequency interface in downlink. In other words, radio frequency signals that are sent by the first radio frequency interface and the third radio frequency interface and received by the array antenna are phase-aligned.

For example, it is assumed that the radio frequency module shown in FIG. 8 controls the frequency of the radio frequency signal sent by the radio frequency interface TX1 (namely, the first radio frequency interface) to be f4, and controls the frequency of the radio frequency signal sent by the radio frequency interface TX0 (the third radio frequency interface) to be f5. Further, after the radio frequency interface TX3 (namely, the fourth radio frequency interface) receives the looped-back third radio frequency signal, the radio frequency module may determine, in the looped-back third radio frequency signal, the radio frequency signal whose frequency is f4 as the radio frequency signal corresponding to the radio frequency interface TX1, and determine the radio frequency signal whose frequency is f5 as the radio frequency signal corresponding to the radio frequency interface TX0, to distinguish between the radio frequency signals in the third radio frequency signal.

After determining the radio frequency signals respectively corresponding to the radio frequency interface TX0 and the radio frequency interface TX1 in the looped-back third radio frequency signal, the radio frequency module may use the radio frequency signal corresponding to the radio frequency interface TX0 as a standard radio frequency signal, and obtain a phase difference between the radio frequency signal corresponding to the radio frequency interface TX1 and the radio frequency signal corresponding to the radio frequency interface TX0. For example, in the looped-back third radio frequency signal, a phase of the radio frequency signal whose frequency is f4 (namely, the radio frequency signal corresponding to the radio frequency interface TX1) lags 30 degrees behind a phase of the radio frequency signal whose frequency is f5 (namely, the radio frequency signal corresponding to the radio frequency interface TX0).

Similarly, the radio frequency module may determine, based on a phase difference of the looped-back second radio frequency signal and the pre-obtained phase difference between different transmission paths, a phase difference between signals sent by different radio frequency interfaces during radio frequency signal exchange, to implement phase correction on the radio frequency interface TX1. Specifically, refer to a specific implementation of S905. Details are not described herein in this application.

It can be learned that the radio frequency module may implement first phase correction by using S901 to S905, to implement phase correction on the plurality of second radio frequency interfaces. Further, the radio frequency module may implement second phase correction by using S906 to S908, to implement phase correction on the first radio frequency interface. Therefore, in this embodiment of this application, the radio frequency module performs phase correction on each of the plurality of radio frequency interfaces, and no additional radio frequency interface or antenna interface needs to be provided.

In some feasible implementations, in addition to implementing phase correction on the plurality of radio frequency interfaces through two times of phase correction based on the phase correction steps in S901 to S908, the radio frequency module may further implement phase correction on the plurality of radio frequency interfaces by using another phase correction step.

In addition, it can be learned from the foregoing content that the communication apparatus may include a plurality of first switches, and each first switch may reflect, when being turned off, a radio frequency signal sent by a second transmission interface correspondingly connected to the first switch, so that the signal transmission module loops back, at an antenna interface correspondingly connected to each first switch, the radio frequency signals sent by the plurality of radio frequency interfaces to the radio frequency module. For ease of understanding, in this embodiment of this application, that the communication apparatus includes the first switch K1, the first switch K5, and the first switch K6 is used as an example to describe a specific implementation of the foregoing phase correction.

For example, the first switch K1 shown in FIG. 8 is disposed between the antenna interface RX3 and the second transmission interface B4, the first switch K5 is disposed between the antenna interface RX2 and the second transmission interface B3, and the first switch K6 is disposed between the antenna interface RX1 and the second transmission interface B2. Further, during the first phase correction, after determining the radio frequency interface TX1 as the first radio frequency interface, the radio frequency module may determine the radio frequency interface TX0 and the radio frequency interface TX2 as second radio frequency interfaces. Then, the radio frequency module may control the first switch K1 to be turned off, and the first switch K5 and the first switch K6 to be turned on. The signal transmission module reflects, to the second transmission interface B4 through the turned-off first switch K1, the radio frequency signals sent by the radio frequency interface TX0 and the radio frequency interface TX2, and then loops back the radio frequency signals to the radio frequency interface TX1. The radio frequency module may perform phase correction on the radio frequency interface TX0 and the radio frequency interface TX2 based on the radio frequency signals that are looped back.

Further, during the second phase correction, the radio frequency module may control the first switch K5 to be turned on, control the first switch K1 and the first switch K6 to be turned on, and then control the radio frequency interfaces TX1 and TX0 to send radio frequency signals. The signal transmission module loops back, to the radio frequency module at the antenna interface RX2 through the turned-off first switch K5, the radio frequency signals sent by the radio frequency interfaces TX1 and TX0. The radio frequency module receives, through the radio frequency interface TX3, the radio frequency signals that are looped back, to perform phase correction on the radio frequency interface TX1 based on the radio frequency interface TX0 on which phase correction has been completed.

Further, during third phase correction, the radio frequency module may control the first switch K6 to be turned on, control the first switch K1 and the first switch K5 to be turned on, and then control the radio frequency interfaces TX3 and TX0 to send radio frequency signals. The signal transmission module loops back, to the radio frequency module at the antenna interface RX1 through the turned-off first switch K6, the radio frequency signals sent by the radio frequency interfaces TX3 and TX0. The radio frequency module receives, through the radio frequency interface TX1, the radio frequency signals that are looped back, to perform phase correction on the radio frequency interface TX3 based on the radio frequency interface TX0 on which phase correction has been completed. It may be understood that the radio frequency module implements phase correction on the plurality of radio frequency interfaces.

In general, a quantity of times that the radio frequency module performs phase correction and a quantity of first switches in the signal transmission module may be adjusted based on an actual application scenario. In addition, a quantity of radio frequency interfaces configured to send a radio frequency signal and receive a radio frequency signal may also be adjusted based on a practical situation each time phase correction is performed. This is not described one by one by using examples in this embodiment of this application.

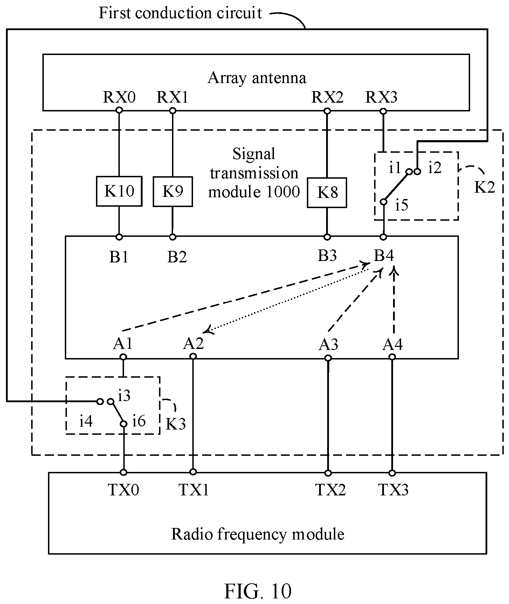

In some feasible implementations, in addition to looping the first radio frequency signal back to the radio frequency module at the first antenna interface through the signal transmission module 800 shown in FIG. 8, the communication apparatus may further implement the foregoing content through the signal transmission module shown in FIG. 10. Specifically, FIG. 10 is a diagram of yet another structure of a signal transmission module according to an embodiment of this application. The signal transmission module 1000 shown in FIG. 10 includes a plurality of first transmission interfaces, a plurality of second transmission interfaces, a second switch K2, and a third switch K3.

The second switch K2 is disposed between a second antenna interface and the second transmission interface correspondingly connected to the second antenna interface. The second antenna interface is any one of at least one antenna interface of an array antenna. For example, in FIG. 10, the second antenna interface is an antenna interface RX3. The third switch K3 is disposed between a fifth radio frequency interface and the first transmission interface correspondingly connected to the fifth radio frequency interface. The fifth radio frequency interface is any one of a plurality of radio frequency interfaces of a radio frequency module. For example, in FIG. 10, the fifth radio frequency interface is a radio frequency interface TX0. In other words, the third switch K3 is disposed between the radio frequency interface TX0 and a first transmission interface A1.

It may be understood that the radio frequency module may control the second switch K2 and the third switch K3 to be turned on. When the second switch K2 and the third switch K3 are turned on, as shown in FIG. 10, a first end i1 of the second switch K2 is connected to a first end i2 of a first conductive path, and a first end i3 of the third switch K3 is connected to a second end i4 of the first conductive path. In addition, a second end i5 of the second switch K2 is further connected to the second transmission interface (namely, a second transmission interface B4) correspondingly connected to the second antenna interface (namely, the antenna interface RX3), and a second end i6 of the third switch K3 is further connected to the fifth radio frequency interface (namely, the radio frequency interface TX0).

It can be learned that, when the second switch K2 and the third switch K3 are turned on, the second transmission interface B4 may be connected to the radio frequency interface TX0 through the second switch K2, the first conductive path, and the third switch K3. It may be understood that, in this case, the second transmission interface B4 may loop a received first radio frequency signal back to the radio frequency interface TX0 of the radio frequency module through the second switch K2, the first conductive path, and the third switch K3.

In addition, when the second switch K2 and the third switch K3 are turned off, the first end i1 of the second switch K2 is connected to the antenna interface RX3, and the first end i3 of the third switch K3 is connected to the first transmission interface A1. In this case, the radio frequency interface TX0 may transmit a sent radio frequency signal to the first transmission interface A1 through the third switch K3, and the first transmission interface A1 transmits the sent radio frequency signal to the second transmission interface B4. Then, the second transmission interface B4 may transmit the radio frequency signal to the antenna interface RX3 through the second switch K2, to complete downlink of the radio frequency signal. Similarly, when the second switch K2 and the third switch K3 are turned off, the antenna interface RX3 may send the radio frequency signal to the radio frequency module through the signal transmission module, to complete uplink of the radio frequency signal.

It may be understood that for a specific implementation of another disposing manner of the second switch and the third switch, refer to the foregoing content. Examples are not described one by one herein in this application.

For example, the second switch K2 may be an electronic switch like a thyristor, a transistor, a field effect transistor, a silicon controlled thyristor, or a relay. Similarly, the third switch K3 may be an electronic switch like a thyristor, a transistor, a field effect transistor, a silicon controlled thyristor, or a relay. It may be understood that this is merely an example, and does not constitute a limitation on embodiments of this application.

It may be understood that the foregoing descriptions are merely examples, and do not constitute a limitation on embodiments of this application. Specific forms and turn-on/off control manners of the second switch and the third switch are not limited in embodiments of this application.

In some feasible implementations, the signal transmission module may include a plurality of second switches. Each second switch may be disposed between any second transmission interface and an antenna interface correspondingly connected to the second transmission interface. For example, it is assumed that the signal transmission module 1000 includes four second switches: the first switch K2, a first switch K8, a first switch K9, and a first switch K10. In this case, the first switch K2 may be disposed between the second transmission interface B4 and the antenna interface RX3, the first switch K8 may be disposed between a second transmission interface B3 and an antenna interface RX2, the first switch K9 may be disposed between a second transmission interface B2 and an antenna interface RX1, and the first switch K10 may be disposed between a second transmission interface B1 and an antenna interface RX0. It may be understood that for a specific implementation of each second switch being turned on or off, refer to the foregoing content. A quantity of second switches in the signal transmission module may be adjusted based on an actual situation. This is not limited herein in this application.

In some feasible implementations, the signal transmission module may further include a fourth switch. The fourth switch is disposed between a seventh radio frequency interface and the first transmission interface correspondingly connected to the seventh radio frequency interface. The seventh radio frequency interface is any one of the plurality of radio frequency interfaces of the radio frequency module other than the fifth radio frequency interface.

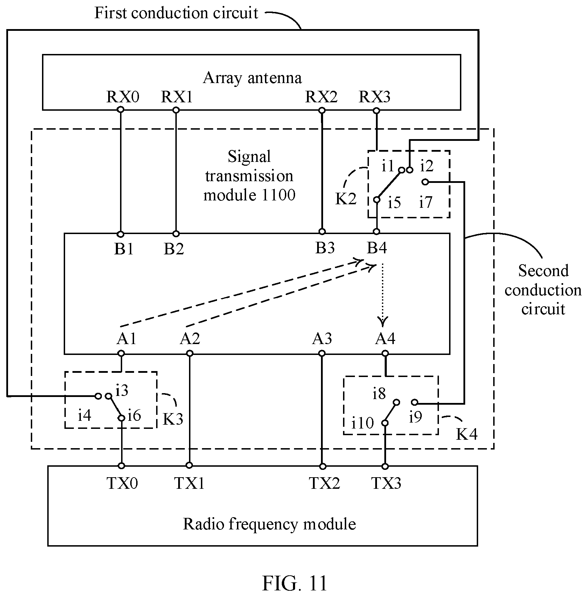

For example, FIG. 11 is a diagram of still yet another structure of a signal transmission module according to an embodiment of this application. In the signal transmission module 1100 shown in FIG. 11, a fourth switch K4 is disposed between a radio frequency interface TX3 and a first transmission interface A4. In addition, a second switch K2 is disposed between an antenna interface RX3 and a second transmission interface B4. A third switch K3 is disposed between a radio frequency interface TX0 and a first transmission interface A1.

It should be noted that disposing positions of the second switch, the third switch, and the fourth switch are merely an example, and do not constitute a limitation on embodiments of this application.

The radio frequency module may control the second switch K2 and the fourth switch K4 to be turned on. When the second switch K2 and the fourth switch K4 are turned on, as shown in FIG. 11, a first end i1 of the second switch K2 is connected to a first end i7 of a second conductive path, and a first end i8 of the fourth switch K4 is connected to a second end i9 of the second conductive path. In addition, a second end i5 of the second switch K2 is further connected to a second transmission interface (namely, the second transmission interface B4) correspondingly connected to a second antenna interface (namely, the antenna interface RX3), and a second end i10 of the fourth switch K4 is further connected to a seventh radio frequency interface (namely, the radio frequency interface TX3).

It can be learned that, when the second switch K2 and the fourth switch K4 are turned on, the second transmission interface B4 may be connected to the radio frequency interface TX3 through the second switch K2, the second conductive path, and the fourth switch K4. It may be understood that, in this case, the second transmission interface B4 may loop a received first radio frequency signal back to the radio frequency interface TX3 of the radio frequency module through the second switch K2, the first conductive path, and the fourth switch K4.

In addition, when the second switch K2 and the fourth switch K4 are turned off, the first end i1 of the second switch K2 is connected to the antenna interface RX3, and the first end i8 of the fourth switch K4 is connected to the first transmission interface A4. In this case, the radio frequency interface TX4 may transmit a sent radio frequency signal to the first transmission interface A4 through the fourth switch K4, and the first transmission interface A4 transmits the sent radio frequency signal to the second transmission interface B4. Then, the second transmission interface B4 may transmit the radio frequency signal to the antenna interface RX3 through the second switch K2, to complete downlink of the radio frequency signal. Similarly, when the second switch K2 and the fourth switch K4 are turned off, the antenna interface RX3 may send the radio frequency signal to the radio frequency module through the signal transmission module, to complete uplink of the radio frequency signal.

For example, the second switch K2 may be an electronic switch like a thyristor, a transistor, a field effect transistor, a silicon controlled thyristor, or a relay. Similarly, the third switch K3 may be an electronic switch like a thyristor, a transistor, a field effect transistor, a silicon controlled thyristor, or a relay. Similarly, the fourth switch K4 may be an electronic switch like a thyristor, a transistor, a field effect transistor, a silicon controlled thyristor, or a relay. It may be understood that this is merely an example, and does not constitute a limitation on embodiments of this application.

It may be understood that the foregoing descriptions are merely examples, and do not constitute a limitation on embodiments of this application. Specific forms and turn-on/off control manners of the second switch, the third switch, and the fourth switch are not limited in embodiments of this application.

It may be understood that the radio frequency module may further control the second switch K2 and the third switch K3 to be turned on. For a specific implementation of turning on the second switch K2 and the third switch K3, refer to the foregoing content. Details are not described herein in this embodiment of this application.

In some feasible implementations, a communication apparatus in this embodiment of this application may loop the first radio frequency signal sent by the plurality of radio frequency interfaces back to the radio frequency module at the second antenna interface (the antenna interface RX3) through the signal transmission module 1100 shown in FIG. 11, so that the radio frequency module may correct, based on the looped-back first radio frequency signal, a phase difference of the radio frequency signal in downlink.

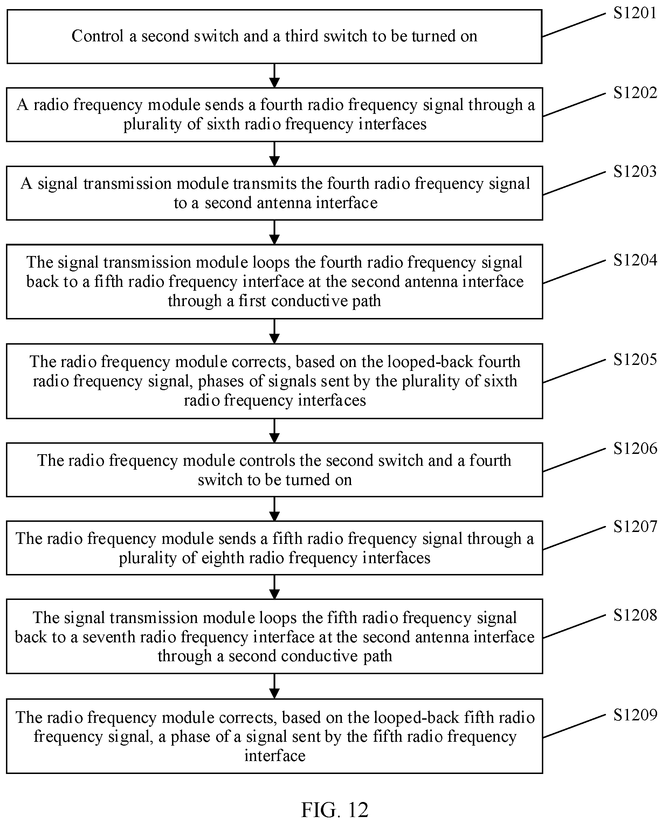

To facilitate understanding of a phase correction procedure of the communication apparatus, the following provides an example description with reference to FIG. 12. The phase correction procedure includes but is not limited to the following steps.

S1201: Control a second switch and a third switch to be turned on.

It can be learned from the foregoing content that, when the second switch and the third switch are turned on, the second switch may loop a radio frequency signal sent by a second transmission interface back to the third switch through a first conductive path, and transmit the radio frequency signal to a fifth radio frequency interface (a radio frequency interface TX0) of a radio frequency module through the third switch. Therefore, to enable the radio frequency module to perform phase correction based on the looped-back radio frequency signal, before sending the radio frequency signal, the radio frequency module may first control the second switch and the third switch to be turned on.

It should be noted that, when the second switch is connected to the third switch, the second switch is disconnected from a fourth switch. In this case, a seventh radio frequency interface is connected to a first transmission interface through the fourth switch, and may send a radio frequency signal to the first transmission interface.

It should be noted that, when a signal transmission module includes a plurality of second switches, specific implementations of the second switches are the same. For ease of description, this embodiment of this application is described herein by using an example in which the signal transmission module includes one second switch. In addition, the first switch is disposed between a second antenna interface and a second transmission interface correspondingly connected to the second antenna interface.

S1202: The radio frequency module sends a fourth radio frequency signal through a plurality of sixth radio frequency interfaces.

After controlling the second switch and the third switch to be turned on, the radio frequency module may determine the fifth radio frequency interface as an interface configured to receive a signal, and determine remaining radio frequency interfaces other than the fifth radio frequency interface among a plurality of radio frequency interfaces as the plurality of sixth radio frequency interfaces. Further, the radio frequency module controls the plurality of sixth radio frequency interfaces to send the fourth radio frequency signal. The fourth radio frequency signal may be understood as a plurality of radio frequency signals respectively sent by the plurality of sixth radio frequency interfaces.

For example, the radio frequency interface TX0 shown in FIG. 8 is the fifth radio frequency interface, and the radio frequency interface TX0 is configured to receive a signal. A radio frequency interface TX1, a radio frequency interface TX2, and a radio frequency interface TX3 are determined as sixth radio frequency interfaces, and the radio frequency interface TX1, the radio frequency interface TX2, and the radio frequency interface TX3 are configured to send the fourth radio frequency signal. The fourth radio frequency signal may be understood as including a radio frequency signal sent by the radio frequency interface TX1, a radio frequency signal sent by the radio frequency interface TX2, and a radio frequency signal sent by the radio frequency interface TX3.

S1203: The signal transmission module transmits the fourth radio frequency signal to the second antenna interface.

For a specific implementation of this step, refer to S903. Details are not described herein in this embodiment of this application.

S1204: The signal transmission module loops back the fourth radio frequency signal to the fifth radio frequency interface at the second antenna interface through the first conductive path.

When the third switch and the second switch are turned on, it can be learned from the foregoing content that, when the fourth radio frequency signal is transmitted to the second antenna interface, the fourth radio frequency signal is looped back by the second switch to the third switch through the first conductive path. Further, the third switch may transmit the looped-back fourth radio frequency signal to the fifth radio frequency interface.

For example, when the third switch K3 and the second switch K2 shown in FIG. 11 are turned on, the fourth radio frequency signal transmitted by a second transmission interface B4 may be transmitted to the radio frequency interface TX0 (namely, the fifth radio frequency interface) through the first conductive path.

S1205: The radio frequency module corrects, based on the looped-back fourth radio frequency signal, phases of signals sent by the plurality of sixth radio frequency interfaces.

It may be understood that for a specific implementation of this step, refer to S905. Details are not described herein in this embodiment of this application.

S1206: The radio frequency module controls the second switch and the fourth switch to be turned on.

It can be learned from the foregoing content that the radio frequency module implements first phase correction by using S1201 to S1205 when the second switch and the third switch are turned on. Specifically, the radio frequency module may perform phase correction on the plurality of sixth radio frequency interfaces based on fourth radio frequency signal sent by the plurality of sixth radio frequency interfaces. However, the fifth radio frequency interface is only configured to receive the looped-back fourth radio frequency signal, and is not configured to send a radio frequency signal. Therefore, the radio frequency module cannot determine a phase difference of the radio frequency signal sent by the fifth radio frequency interface in downlink. Therefore, after correcting the phases of the radio frequency signals sent by the plurality of sixth radio frequency interfaces, the radio frequency module may further correct the fifth radio frequency interface through second phase correction, to perform phase correction on each of the plurality of radio frequency interfaces.

Specifically, during the second phase correction, the radio frequency module may control the second switch and the fourth switch to be turned on. In this case, the second switch may loop a radio frequency signal sent by the second transmission interface back to the fourth switch through a second conductive path, and transmit the radio frequency signal to the seventh radio frequency interface of the radio frequency module through the fourth switch.

It should be noted that, when the second switch is connected to the fourth switch, the second switch is disconnected from the third switch. In this case, the fifth radio frequency interface is connected to the first transmission interface through the second switch, and may send a radio frequency signal to the first transmission interface.

S1207: The radio frequency module sends a fifth radio frequency signal through a plurality of eighth radio frequency interfaces.

Specifically, after performing phase correction on the plurality of sixth radio frequency interfaces, the radio frequency module may use, as the eighth radio frequency interface, any sixth radio frequency interface among the plurality of sixth radio frequency interfaces on which the correction is completed. Then, the radio frequency module may adjust the radio frequency signal sent by the fifth radio frequency interface in downlink to be phase-aligned with a radio frequency signal sent by the eighth radio frequency interface in downlink, to complete phase correction on the fifth radio frequency interface.

For example, after completing phase correction on the radio frequency interface TX1, the radio frequency interface TX2, and the radio frequency interface TX3, the radio frequency module shown in FIG. 11 may determine the radio frequency interface TX1 as the eighth radio frequency interface. Alternatively, the radio frequency module may determine the radio frequency interface TX2 or the radio frequency interface TX3 as the eighth radio frequency interface. This is not limited in embodiments of this application.

Further, the radio frequency module may control the radio frequency interface TX0 (namely, the fifth radio frequency interface) and the radio frequency interface TX1 (the eighth radio frequency interface) to send the fifth radio frequency signal. The fifth radio frequency signal may be understood as including a radio frequency signal sent by the radio frequency interface TX0 and a radio frequency signal sent by the radio frequency interface TX1. It can be learned from the foregoing content that the radio frequency module may adjust frequencies, amplitudes, or the like of radio frequency signals sent by the radio frequency interface TX0 and the radio frequency interface TX1 to be different.

S1208: The signal transmission module loops back the fifth radio frequency signal to the seventh radio frequency interface at the second antenna interface through the second conductive path.

When the second switch and the fourth switch are turned on, it can be learned from the foregoing content that, when the fifth radio frequency signal is transmitted to the second antenna interface, the fifth radio frequency signal is looped back by the second switch to the fourth switch through the second conductive path. Further, the fourth switch may transmit the looped-back fifth radio frequency signal to the seventh radio frequency interface.

For example, when the fourth switch K4 and the second switch K2 shown in FIG. 11 are turned on, the fifth radio frequency signal transmitted by the second transmission interface B4 may be transmitted to the radio frequency interface TX3 (namely, the seventh radio frequency interface) through the second conductive path.

S1209: The radio frequency module corrects, based on the looped-back fifth radio frequency signal, a phase of a signal sent by the fifth radio frequency interface.

It may be understood that for a specific implementation of this step, refer to S908. Details are not described herein in this embodiment of this application.

Similarly, in addition to implementing phase correction on the plurality of radio frequency interfaces through two times of phase correction based on the phase correction steps in S1201 to S1209, the radio frequency module may further implement phase correction on the plurality of radio frequency interfaces by using another phase correction step. For details, refer to the foregoing content. Details are not described herein in this application.

In conclusion, the radio frequency module is connected to the antenna interface through the signal transmission module, and sends the first radio frequency signal to the signal transmission module through the plurality of radio frequency interfaces. The signal transmission module may send the first radio frequency signal to the antenna interface, and loop the first radio frequency signal back to the radio frequency module at the antenna interface, so that the radio frequency module may correct, based on the looped-back first radio frequency signal, the phases of the signals sent by the plurality of radio frequency interfaces. It may be understood that the radio frequency module may send a radio frequency signal through each radio frequency interface, and then the signal transmission module may loop the radio frequency signal sent by each radio frequency interface back to the radio frequency module, so that the radio frequency module performs phase correction on each radio frequency interface that sends the radio frequency signal. Therefore, in this solution, the communication apparatus may correct a phase of a signal sent by each radio frequency interface of the radio frequency module, and does not need to be provided with an additional correction interface, thereby saving interface resources and having high applicability.

Embodiments of this application describe a communication apparatus with reference to FIG. 5 to FIG. 12, to correct a phase difference of a radio frequency signal sent by each radio frequency interface in a radio frequency module in downlink, so that radio frequency signals that are sent by radio frequency interfaces in the radio frequency module and received by an array antenna are phase-aligned. In addition, an embodiment of this application further provides a communication apparatus, to correct a phase difference of a radio frequency signal sent by each antenna interface in an array antenna in uplink, so that radio frequency signals that are sent by antenna interfaces in the array antenna and received by the radio frequency module are phase-aligned.

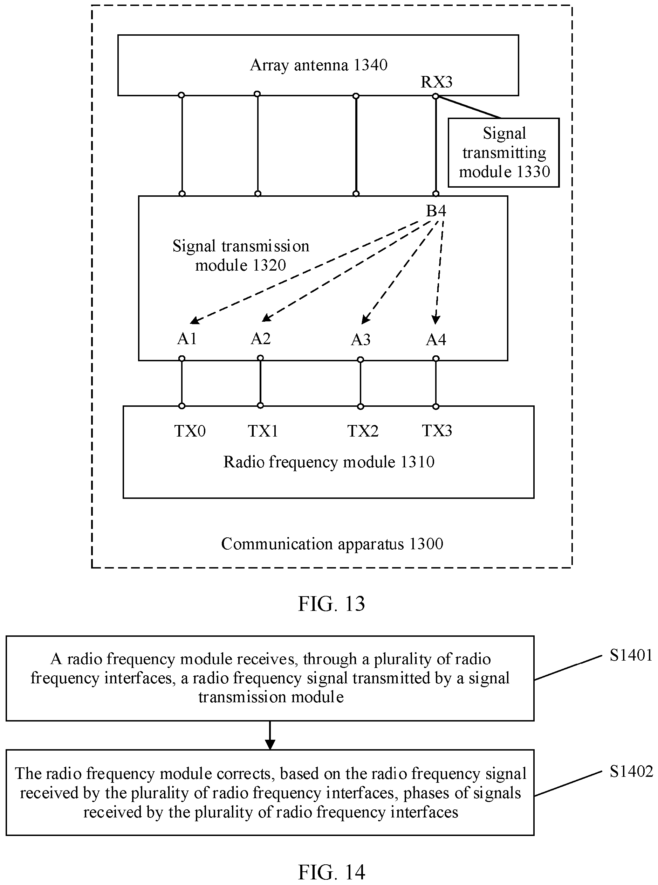

In some feasible implementations, FIG. 13 is a diagram of still another structure of a communication apparatus according to an embodiment of this application. The communication apparatus 1300 shown in FIG. 13 includes a radio frequency module 1310, a signal transmission module 1320, a signal transmitting module 1330, and an array antenna 1340. The radio frequency module 1310 includes a plurality of radio frequency interfaces, and the plurality of radio frequency interfaces are connected to the signal transmission module 1320. The signal transmission module 1320 is further connected to a first antenna interface RX3. The first antenna interface RX3 is any one of a plurality of antenna interfaces of the array antenna 1340. The first antenna interface RX3 is further connected to the signal transmitting module 1330.

The signal transmitting module 1330 may generate a radio frequency signal, and send the radio frequency signal to the signal transmission module 1320 through the first antenna interface RX3. The signal transmission module 1320 may transmit the received radio frequency signal to a plurality of radio frequency interfaces. For example, in the signal transmission module 1320 shown in FIG. 13, the signal transmission module 1320 separately transmits the received radio frequency signal to a radio frequency interface TX0, a radio frequency interface TX1, a radio frequency interface TX2, and a radio frequency interface TX3.

For a specific implementation of the signal transmission module, refer to the descriptions of FIG. 6 and FIG. 7 in the foregoing content. Details are not described herein in this embodiment of this application.

After receiving the radio frequency signal through the plurality of radio frequency interfaces, the radio frequency module 1310 may correct, based on the received signal, a phase of a signal received by each radio frequency interface, that is, correct a phase difference of the radio frequency signal in uplink.

To facilitate understanding of a phase correction procedure of the communication apparatus, the following provides an example description with reference to FIG. 14. The phase correction procedure includes but is not limited to the following steps.

S1401: A radio frequency module receives, through a plurality of radio frequency interfaces, a radio frequency signal transmitted by a signal transmission module.

It may be understood that the signal transmitting module may generate a radio frequency signal, and transmit the radio frequency signal to the plurality of radio frequency interfaces of the radio frequency module through the signal transmission module.

For example, the signal transmitting module 1330 shown in FIG. 13 is connected to a second transmission interface B4 of the signal transmission module 1320 through the first antenna interface RX3, and the second transmission interface B4 is interconnected with a plurality of first transmission interfaces. When the signal transmitting module 1330 sends the radio frequency signal through the first antenna interface RX3, the second transmission interface B4 receives the radio frequency signal, transmits the radio frequency signal to a first transmission interface A1, a first transmission interface A2, a first transmission interface A3, and a first transmission interface A4 that are interconnected, and then transmits the radio frequency signal to each radio frequency interface of the radio frequency module 1310.

S1402: The radio frequency module corrects, based on the radio frequency signal received by the plurality of radio frequency interfaces, phases of signals received by the plurality of radio frequency interfaces.

For a specific implementation of performing phase correction by the radio frequency module 1310, refer to the related descriptions of S905 in the foregoing content. Details are not described herein in this embodiment of this application.

It may be understood that, after the radio frequency module 1310 completes the foregoing phase correction on the plurality of radio frequency interfaces, when the array antenna 1340 sends a radio frequency signal to the signal transmission module 1320 through antenna interfaces, and transmits the radio frequency signal to radio frequency interfaces of the radio frequency module 1310 through the signal transmission module 1320, radio frequency signals received by the radio frequency interfaces of the radio frequency module 1310 are phase-aligned.

It should be noted that, in FIG. 3 or FIG. 4, the communication apparatus 300 or the communication apparatus 400 obtains coupled signals of the plurality of radio frequency signals by using a coupler, to perform phase correction based on phase differences of the plurality of coupled signals. However, the coupler causes a large loss to the radio frequency signal, and the loss usually reaches 20 dB or above. Therefore, the radio frequency signal sent by the communication apparatus 300 or the communication apparatus 400 needs to have high strength, to ensure that the coupler obtains a coupled signal with sufficient strength. It can be learned that a signal source of the communication apparatus 300 or the communication apparatus 400 needs to have high power.

Compared with the communication apparatus 300 or the communication apparatus 400, the communication apparatus 1300 in this embodiment of this application loops back the radio frequency signal through the signal transmission module 1320, to perform phase correction. The signal transmission module 1320 transmits the radio frequency signal through a bridge circuit (for example, the first bridge circuit and the second bridge circuit). However, the bridge circuit has a simple structure and causes a small transmission loss to the radio frequency signal, that is, the signal transmission module 1320 causes a small loss to the radio frequency signal, and the loss is usually only 6 dB. Therefore, the signal transmitting module 1330 in the communication apparatus 1300 may use a signal transmitting source with a simple structure, and does not need to have high transmit strength, thereby reducing costs, power consumption, and design difficulty of the communication apparatus.

In conclusion, in this solution, the signal transmission module may send, through a plurality of first bridge circuits and a plurality of second bridge circuits, the radio frequency signal sent by the signal transmitting module to the plurality of radio frequency interfaces of the radio frequency module. In addition, the signal transmission module has a simple structure and causes a small loss to the radio frequency signal. When it is ensured that strength of the radio frequency signal received by the radio frequency module is sufficiently high, strength of the radio frequency signal sent by the signal transmitting module in this embodiment of this application is low. Therefore, the signal transmitting module may use a simple signal transmitting source, to reduce costs and reduce a size and design difficulty of the apparatus.

The foregoing mainly describes the phase correction method provided in embodiments of this application. It may be understood that, to implement the foregoing corresponding functions, the radio frequency module and the array antenna include corresponding hardware structures and/or software modules for performing the functions. In combination with example units and steps described in embodiments disclosed in this specification, this application can be implemented by hardware or a combination of hardware and computer software. Whether a function is executed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, the radio frequency module may be divided into functional modules based on the foregoing method examples. For example, each functional module corresponding to each function may be obtained through division, or two or more functions may be integrated into one module. The integrated module may be implemented in a form of hardware, or may be implemented in a form of software functional module. It should be noted that, in embodiments of this application, division into the modules is an example and is merely logical function division, and may be other division during actual implementation.

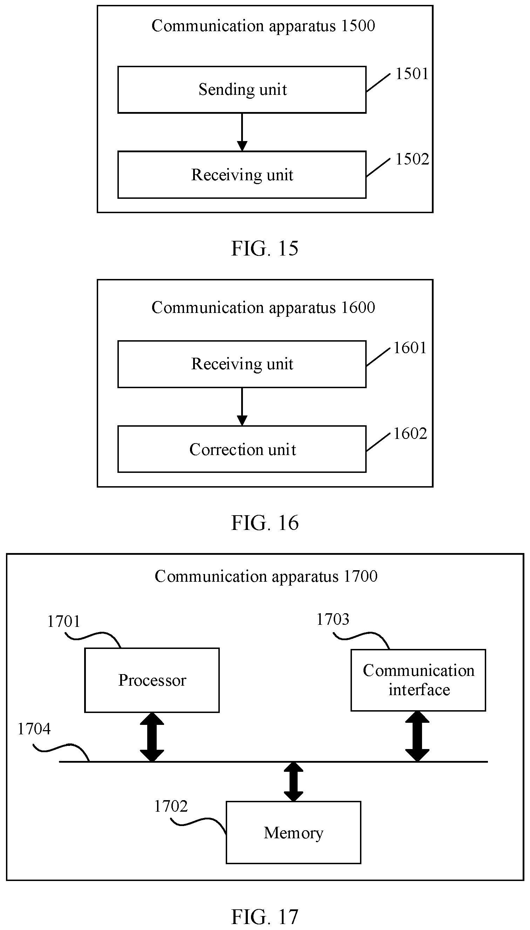

When each functional module corresponding to each function is obtained through division, FIG. 15 is a diagram of a possible logical structure of a communication apparatus 1500. The communication apparatus 1500 may be the radio frequency module, or may be a chip in the radio frequency module, or may be a processing system in the radio frequency module, or the like. The communication apparatus 1500 includes a sending unit 1501 and a receiving unit 1502.

The sending unit 1501 is configured to send a first radio frequency signal through a plurality of radio frequency interfaces.

The receiving unit 1502 is configured to: receive the first radio frequency signal that is looped back by a signal transmission module, where the first radio frequency signal is transmitted by the signal transmission module to at least one antenna interface, and is looped back to the radio frequency module at the at least one antenna interface; and correct, based on the looped-back first radio frequency signal, phases of signals sent by the plurality of radio frequency interfaces.

In a possible implementation, the signal transmission module is connected to a plurality of antenna interfaces, and the plurality of antenna interfaces include the at least one antenna interface.

The signal transmission module includes a plurality of first transmission interfaces and a plurality of second transmission interfaces, the plurality of first transmission interfaces are connected to the plurality of radio frequency interfaces in a one-to-one correspondence, the plurality of second transmission interfaces are connected to the plurality of antenna interfaces in a one-to-one correspondence, and each first transmission interface is interconnected with any one of the plurality of second transmission interfaces.

In a possible implementation, the signal transmission module includes n first transmission interfaces and n second transmission interfaces, and the signal transmission module includes n1 first bridge circuits and n1 second bridge circuits; and each first bridge circuit includes n2 first transmission interfaces, each second bridge circuit includes n2 second transmission interfaces, and each first bridge circuit is connected to any one of the n1 second bridge circuits, where n1×n2 is equal to n.

In a possible implementation, the signal transmission module further includes a first switch, the first switch is disposed between a first antenna interface and the second transmission interface correspondingly connected to the first antenna interface, and the first antenna interface is any one of the at least one antenna interface.

The receiving unit 1502 is further configured to receive the first radio frequency signal that is looped back by the signal transmission module at the first antenna interface through the turned-off first switch.

In a possible implementation, the radio frequency module controls the first switch to be turned off, and the sending unit 1501 is further configured to: When a first radio frequency interface among the plurality of radio frequency interfaces is configured to receive a signal, send a second radio frequency signal through a plurality of second radio frequency interfaces, where the first radio frequency interface is any one of the plurality of radio frequency interfaces, and the second radio frequency interfaces are remaining radio frequency interfaces other than the first radio frequency interface among the plurality of radio frequency interfaces.

The receiving unit 1502 is further configured to receive, through the first radio frequency interface, the second radio frequency signal that is looped back by the signal transmission module at the first antenna interface through the turned-off first switch.

In a possible implementation, the sending unit 1501 is further configured to send a third radio frequency signal through the first radio frequency interface and a third radio frequency interface, where the third radio frequency interface is any one of the plurality of second radio frequency interfaces.

The receiving unit 1502 is further configured to: receive, through a fourth radio frequency interface of the radio frequency module, the third radio frequency signal that is looped back by the signal transmission module at the first antenna interface through the turned-off first switch, where the fourth radio frequency interface is any one of the plurality of second radio frequency interfaces other than the third radio frequency interface.

In a possible implementation, the signal transmission module further includes a second switch and a third switch; the second switch is disposed between a second antenna interface and the second transmission interface correspondingly connected to the second antenna interface; the second antenna interface is any one of the at least one antenna interface; the third switch is disposed between a fifth radio frequency interface and the first transmission interface correspondingly connected to the fifth radio frequency interface; and the fifth radio frequency interface is any one of the plurality of radio frequency interfaces.

The receiving unit 1502 is further configured to control the second switch and the third switch to be turned on, so that a first end of the second switch is connected to a first end of a first conductive path, and a first end of the third switch is connected to a second end of the first conductive path; and a second end of the second switch is further connected to the second transmission interface correspondingly connected to the second antenna interface, and a second end of the third switch is further connected to the fifth radio frequency interface.

The receiving unit 1502 is further configured to receive, through the fifth radio frequency interface, a fourth radio frequency signal that is looped back by the signal transmission module at the second antenna interface through the first conductive path, where the fourth radio frequency signal is a radio frequency signal sent by a plurality of sixth radio frequency interfaces, and the plurality of sixth radio frequency interfaces are remaining radio frequency interfaces other than the fifth radio frequency interface among the plurality of radio frequency interfaces.

In a possible implementation, the signal transmission module further includes a fourth switch, the fourth switch is disposed between a seventh radio frequency interface and the first transmission interface correspondingly connected to the seventh radio frequency interface, and the seventh radio frequency interface is any one of the plurality of sixth radio frequency interfaces.

The receiving unit 1502 is further configured to control the second switch and the fourth switch to be turned on, so that the first end of the second switch is connected to a first end of a second conductive path, and a first end of the fourth switch is connected to a second end of the second conductive path; and the second end of the second switch is further connected to the second transmission interface correspondingly connected to the second antenna interface, and a second end of the fourth switch is further connected to the seventh radio frequency interface.

The receiving unit 1502 is further configured to receive, through the seventh radio frequency interface, a fifth radio frequency signal that is looped back by the signal transmission module at the second antenna interface through the second switch connected to the fourth switch, where the fifth radio frequency signal is a radio frequency signal sent by the fifth radio frequency interface and an eighth radio frequency interface, and the eighth radio frequency interface is any one of the plurality of radio frequency interfaces other than the seventh radio frequency interface.

For specific operations and beneficial effects of the units in the communication apparatus 1500 shown in FIG. 15, refer to corresponding descriptions in FIG. 6 to FIG. 12 and the possible embodiments thereof. Details are not described herein again.

FIG. 16 is a diagram of a possible logical structure of a communication apparatus 1600. The communication apparatus 1600 may be the radio frequency module, or may be a chip in the radio frequency module, or may be a processing system in the radio frequency module, or the like. The communication apparatus 1600 includes a receiving unit 1601 and a correction unit 1602.

The receiving unit 1601 is configured to receive, through the plurality of radio frequency interfaces, a radio frequency signal transmitted by the signal transmission module, where the radio frequency signal is sent by the signal transmitting module through the first antenna interface, and is transmitted by the signal transmission module to the plurality of radio frequency interfaces.

The correction unit 1602 is configured to correct, based on the radio frequency signal received by the plurality of radio frequency interfaces, phases of signals received by the plurality of radio frequency interfaces.

In a possible implementation, the signal transmission module is connected to a plurality of antenna interfaces, and the plurality of antenna interfaces include the at least one antenna interface.

The signal transmission module includes a plurality of first transmission interfaces and a plurality of second transmission interfaces, the plurality of first transmission interfaces are connected to the plurality of radio frequency interfaces in a one-to-one correspondence, the plurality of second transmission interfaces are connected to the plurality of antenna interfaces in a one-to-one correspondence, and each first transmission interface is interconnected with any one of the plurality of second transmission interfaces.

In a possible implementation, the signal transmission module includes n first transmission interfaces and n second transmission interfaces, and the signal transmission module includes n1 first bridge circuits and n1 second bridge circuits; and each first bridge circuit includes n2 first transmission interfaces, each second bridge circuit includes n2 second transmission interfaces, and each first bridge circuit is connected to any one of the n1 second bridge circuits, where n1×n2 is equal to n.

For specific operations and beneficial effects of the units in the communication apparatus 1600 shown in FIG. 16, refer to corresponding descriptions in FIG. 13 and FIG. 14 and the possible embodiments thereof. Details are not described herein again.

FIG. 17 is a diagram of a possible hardware structure of a communication apparatus 1700 according to an embodiment of this application. The communication apparatus 1700 may be the radio frequency module in the method in the foregoing embodiment, or may be a chip in the radio frequency module, or may be a processing system in the radio frequency module, or the like. The communication apparatus 1700 includes a processor 1701, a memory 1702, and a communication interface 1703. The processor 1701, the communication interface 1703, and the memory 1702 may be connected to each other or connected to each other through a bus 1704.

For example, the memory 1702 is configured to store a computer program and data of the communication apparatus 1700. The memory 1702 may include but is not limited to a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

Software or program code required for implementing functions of all or a part of units in the method shown in FIG. 9 is stored in the memory 1702.

If software or program code required for implementing functions of a part of units is stored in the memory 1702, in addition to invoking the program code in the memory 1702 to implement a part of functions, the processor 1701 may further cooperate with another component (for example, the communication interface 1703) to jointly complete another function (for example, the function of receiving information) described in the method shown in FIG. 9.

There may be a plurality of communication interfaces 1703 that are configured to support the communication apparatus 1700 in performing communication, for example, receiving or sending data, a signal, signaling, or the like.

For example, the processor 1701 may be a central processing unit, a general-purpose processor, a digital signal processor, an application-specific integrated circuit, a field programmable gate array or another programmable logic device, a transistor logic device, a hardware component, or any combination thereof. Alternatively, the processor may be a combination of processors implementing a computing function, for example, a combination of one or more microprocessors, or a combination of the digital signal processor and a microprocessor. The processor 1701 may be configured to read a program stored in the memory 1702, to perform an operation performed by the radio frequency module in the method in FIG. 9 and the possible implementations thereof. For example, the processor 1701 may perform the following operations:
sending a first radio frequency signal through the plurality of radio frequency interfaces;
receiving the first radio frequency signal that is looped back by the signal transmission module, where the first radio frequency signal is transmitted by the signal transmission module to the at least one antenna interface, and is looped back to the radio frequency module at the at least one antenna interface; and
correcting, based on the looped-back first radio frequency signal, phases of signals sent by the plurality of radio frequency interfaces.

For specific operations and beneficial effects of the communication apparatus 1700 shown in FIG. 17, refer to descriptions in the method in FIG. 9 and the possible implementations thereof. Details are not described herein again.

In another possible implementation, the processor 1701 may be configured to read a program stored in the memory 1702, to perform an operation performed by the radio frequency module in the method in FIG. 14 and the possible implementations thereof. For example, the processor 1701 may perform the following operations:
receiving, through the plurality of radio frequency interfaces, a radio frequency signal transmitted by the signal transmission module, where the radio frequency signal is sent by the signal transmitting module through the first antenna interface, and is transmitted by the signal transmission module to the plurality of radio frequency interfaces; and
correcting, based on the radio frequency signal received by the plurality of radio frequency interfaces, phases of signals received by the plurality of radio frequency interfaces.

For specific operations and beneficial effects of the communication apparatus 1700 shown in FIG. 17, refer to descriptions in the method in FIG. 14 and the possible implementations thereof. Details are not described herein again.

An embodiment of this application further provides a chip. The chip includes a processor, and the processor is configured to execute a computer program or computer instructions stored in a memory, so that the chip performs an operation performed by the radio frequency module in the method in FIG. 9 and any one of the possible method embodiments thereof.

An embodiment of this application further provides a chip. The chip includes a processor, and the processor is configured to execute a computer program or computer instructions stored in a memory, so that the chip performs an operation performed by the radio frequency module in the method in FIG. 14 and any one of the possible method embodiments thereof.

An embodiment of this application further provides a computer-readable storage medium. The computer-readable storage medium stores a computer program, and the computer program is executed by a processor to implement an operation performed by the radio frequency module in the method in FIG. 9 and any one of the possible method embodiments thereof.

An embodiment of this application further provides a computer-readable storage medium. The computer-readable storage medium stores a computer program, and the computer program is executed by a processor to implement an operation performed by the radio frequency module in the method in FIG. 14 and any one of the possible method embodiments thereof.

An embodiment of this application further provides a computer program product. When the computer program product is read and executed by a computer, an operation performed by the radio frequency module in the method in FIG. 9 and any one of the possible method embodiments thereof is performed.

An embodiment of this application further provides a computer program product. When the computer program product is read and executed by a computer, an operation performed by the radio frequency module in the method in FIG. 14 and any one of the possible method embodiments thereof is performed.

It should be noted that prefix words such as "first" and "second" used in this application are merely used to distinguish between different described objects, and do not limit positions, a sequence, priorities, a quantity, or content of the described objects. For example, if the described objects are "fields", ordinal numbers before "field" in a "first field" and a "second field" do not limit positions or a sequence of the "fields", and "first" and "second" do not limit whether the modified "fields" are in a same message, and do not limit a sequence of the "first field" and the "second field". For another example, if the described objects are "levels", ordinal numbers before "level" in a "first level" and a "second level" do not limit priorities between the "levels". For another example, a quantity of described objects is not limited by a prefix word, and may be one or more. A "first device" is used as an example, where a quantity of "devices" may be one or more. In addition, objects modified by different prefix words may be the same or different. For example, if a described object is a "device", a "first device" and a "second device" may be a same device, devices of a same type, or devices of different types. For another example, if a described object is "information", "first information" and "second information" may be information of same content or information of different content. For example, without departing from the scope of the various preceding examples, a user-side apparatus may be referred to as a server, and similarly, the server may be referred to as a user-side apparatus. Both the user-side apparatus and the server may be nodes, and may be separate and different nodes in some cases. In conclusion, use of a prefix word used to distinguish between the described objects in embodiments of this application does not constitute a limitation on the described objects. For descriptions of the described objects, refer to the context descriptions in the claims or embodiments, and the use of such a prefix word should not constitute a redundant limitation.

It should be noted that, in embodiments of this application, a description like "at least one (or at least one piece) of a1, a2, ..., and an" is used, including a case in which any one of a1, a2, ..., and an exists alone, and also including a case of any combination of any plurality of a1, a2, ..., and an. Each case may exist alone. For example, a description of "at least one of a, b, and c" includes a case of a single a, a single b, a single c, a combination of a and b, a combination of a and c, a combination of b and c, or a combination of a, b, and c.

It should further be understood that sequence numbers of processes do not mean execution sequences in embodiments of this application. The execution sequences of the processes should be determined based on functions and internal logic of the processes, and should not be construed as any limitation on the implementation processes of embodiments of this application.

It should be further understood that, when being used in the specification, the term "include" (also referred to as "includes", "including", "comprises", and/or "comprising") specifies presence of stated features, integers, steps, operations, elements, and/or components, but does not preclude presence or addition of one or more other features, integers, steps, operations, elements, components, and/or groups thereof.

It should be further understood that "one embodiment", "an embodiment", and "a possible implementation" mentioned throughout the specification mean that a specific feature, structure, or characteristic related to the embodiment or the implementation is included in at least one of embodiments of this application. Therefore, "in one embodiment", "in an embodiment", or "in a possible implementation" appearing throughout the specification may not necessarily refer to a same embodiment. In addition, these particular features, structures, or characteristics may be combined in one or more embodiments in any appropriate manner.

Finally, it should be noted that the foregoing embodiments are merely intended for describing the technical solutions in embodiments of this application rather than limiting this application. Although this application is described in detail with reference to the foregoing embodiments, a person of ordinary skill in the art should understand that modifications may still be made to the technical solutions described in the foregoing embodiments or equivalent replacements are made to a part of or all technical features thereof, without departing from the scope of the technical solutions of embodiments of this application.

## Claims

1. A communication apparatus, wherein the apparatus comprises a radio frequency module and a signal transmission module, the radio frequency module comprises a plurality of radio frequency interfaces, the plurality of radio frequency interfaces are connected to the signal transmission module, and the signal transmission module is further connected to at least one antenna interface;
the radio frequency module is configured to send a first radio frequency signal through the plurality of radio frequency interfaces;
the signal transmission module is configured to transmit the first radio frequency signal to the at least one antenna interface, and loop the first radio frequency signal back to the radio frequency module at the at least one antenna interface; and
the radio frequency module is further configured to correct, based on the looped-back first radio frequency signal, phases of signals sent by the plurality of radio frequency interfaces.

2. The apparatus according to claim 1, wherein the signal transmission module is connected to a plurality of antenna interfaces, and the plurality of antenna interfaces comprise the at least one antenna interface; and
the signal transmission module comprises a plurality of first transmission interfaces and a plurality of second transmission interfaces, the plurality of first transmission interfaces are connected to the plurality of radio frequency interfaces in a one-to-one correspondence, the plurality of second transmission interfaces are connected to the plurality of antenna interfaces in a one-to-one correspondence, and each first transmission interface is interconnected with any one of the plurality of second transmission interfaces.

3. The apparatus according to claim 2, wherein the signal transmission module comprises n first transmission interfaces and n second transmission interfaces, and the signal transmission module comprises n1 first bridge circuits and n1 second bridge circuits; and each first bridge circuit comprises n2 first transmission interfaces, each second bridge circuit comprises n2 second transmission interfaces, and each first bridge circuit is connected to any one of the plurality of second bridge circuits, wherein n1×n2 is equal to n.

4. The apparatus according to claim 2 or 3, wherein the signal transmission module further comprises a first switch, the first switch is disposed between a first antenna interface and the second transmission interface correspondingly connected to the first antenna interface, and the first antenna interface is any one of the at least one antenna interface; and
looping the first radio frequency signal back to the radio frequency module at the at least one antenna interface comprises:
looping the first radio frequency signal back to the radio frequency module at the first antenna interface through the turned-off first switch.

5. The apparatus according to claim 4, wherein the radio frequency module is configured to control the first switch to be turned off;
that the radio frequency module is configured to send the first radio frequency signal through the plurality of radio frequency interfaces comprises: When a first radio frequency interface among the plurality of radio frequency interfaces is configured to receive a signal, the radio frequency module is configured to send a second radio frequency signal through a plurality of second radio frequency interfaces; and the first radio frequency interface is any one of the plurality of radio frequency interfaces, and the second radio frequency interfaces are remaining radio frequency interfaces other than the first radio frequency interface among the plurality of radio frequency interfaces; and
the signal transmission module is specifically configured to loop the second radio frequency signal back to the first radio frequency interface of the radio frequency module at the first antenna interface through the turned-off first switch.

6. The apparatus according to claim 5, wherein that the radio frequency module is configured to send the first radio frequency signal through the plurality of radio frequency interfaces further comprises: the radio frequency module is configured to send a third radio frequency signal through the first radio frequency interface and a third radio frequency interface, and the third radio frequency interface is any one of the plurality of second radio frequency interfaces; and
the signal transmission module is further specifically configured to loop the third radio frequency signal back to a fourth radio frequency interface of the radio frequency module at the first antenna interface through the turned-off first switch, and the fourth radio frequency interface is any one of the plurality of second radio frequency interfaces other than the third radio frequency interface.

7. The apparatus according to claim 2 or 3, wherein the signal transmission module further comprises a second switch and a third switch; the second switch is disposed between a second antenna interface and the second transmission interface correspondingly connected to the second antenna interface; the second antenna interface is any one of the at least one antenna interface; the third switch is disposed between a fifth radio frequency interface and the first transmission interface correspondingly connected to the fifth radio frequency interface; and the fifth radio frequency interface is any one of the plurality of radio frequency interfaces;
the radio frequency module is configured to control the second switch and the third switch to be turned on, so that a first end of the second switch is connected to a first end of a first conductive path, and a first end of the third switch is connected to a second end of the first conductive path;
and a second end of the second switch is further connected to the second transmission interface correspondingly connected to the second antenna interface, and a second end of the third switch is further connected to the fifth radio frequency interface; and
looping the first radio frequency signal back to the radio frequency module at the at least one antenna interface comprises:
looping a fourth radio frequency signal back to the fifth radio frequency interface at the second antenna interface through the first conductive path, wherein the fourth radio frequency signal is a radio frequency signal sent by a plurality of sixth radio frequency interfaces, and the plurality of sixth radio frequency interfaces are remaining radio frequency interfaces other than the fifth radio frequency interface among the plurality of radio frequency interfaces.

8. The apparatus according to claim 7, wherein the signal transmission module further comprises a fourth switch, the fourth switch is disposed between a seventh radio frequency interface and the first transmission interface correspondingly connected to the seventh radio frequency interface, and the seventh radio frequency interface is any one of the plurality of sixth radio frequency interfaces;
the radio frequency module is configured to control the second switch and the fourth switch to be turned on, so that the first end of the second switch is connected to a first end of a second conductive path, and a first end of the fourth switch is connected to a second end of the second conductive path; and the second end of the second switch is further connected to the second transmission interface correspondingly connected to the second antenna interface, and a second end of the fourth switch is further connected to the seventh radio frequency interface; and
looping the first radio frequency signal back to the radio frequency module at the at least one antenna interface further comprises:
looping a fifth radio frequency signal back to the seventh radio frequency interface at the second antenna interface through the second conductive path, wherein the fifth radio frequency signal is a radio frequency signal sent by the fifth radio frequency interface and an eighth radio frequency interface, and the eighth radio frequency interface is any one of the plurality of radio frequency interfaces other than the seventh radio frequency interface.

9. A communication apparatus, wherein the apparatus comprises a radio frequency module, a signal transmission module, and a signal transmitting module; the radio frequency module comprises a plurality of radio frequency interfaces, the plurality of radio frequency interfaces are connected to the signal transmission module, and the signal transmission module is further connected to a first antenna interface; and the first antenna interface is further connected to the signal transmitting module;
the signal transmitting module is configured to send a radio frequency signal through the first antenna interface;
the signal transmission module is configured to transmit the radio frequency signal to the radio frequency module through the plurality of radio frequency interfaces; and
the radio frequency module is configured to correct, based on the radio frequency signal received by the plurality of radio frequency interfaces, phases of signals received by the plurality of radio frequency interfaces.

10. The apparatus according to claim 9, wherein the signal transmission module is connected to a plurality of antenna interfaces, and the plurality of antenna interfaces comprise the first antenna interface; and
the signal transmission module comprises a plurality of first transmission interfaces and a plurality of second transmission interfaces, the plurality of first transmission interfaces are connected to the plurality of radio frequency interfaces in a one-to-one correspondence, the plurality of second transmission interfaces are connected to the plurality of antenna interfaces in a one-to-one correspondence, and each first transmission interface is interconnected with any one of the plurality of second transmission interfaces.

11. The apparatus according to claim 10, wherein the signal transmission module comprises n first transmission interfaces and n second transmission interfaces, and the signal transmission module comprises n1 first bridge circuits and n1 second bridge circuits; and each first bridge circuit comprises n2 first transmission interfaces, each second bridge circuit comprises n2 second transmission interfaces, and each first bridge circuit is connected to any one of the plurality of second bridge circuits, wherein n1×n2 is equal to n.

12. A phase correction method, wherein the method is applied to a radio frequency module, the radio frequency module comprises a plurality of radio frequency interfaces, the plurality of radio frequency interfaces are connected to a signal transmission module, the signal transmission module is further connected to at least one antenna interface, and the method comprises:
sending a first radio frequency signal through the plurality of radio frequency interfaces;
receiving the first radio frequency signal that is looped back by the signal transmission module, wherein the first radio frequency signal is transmitted by the signal transmission module to the at least one antenna interface, and is looped back to the radio frequency module at the at least one antenna interface; and
correcting, based on the looped-back first radio frequency signal, phases of signals sent by the plurality of radio frequency interfaces.

13. The method according to claim 12, wherein the signal transmission module is connected to a plurality of antenna interfaces, and the plurality of antenna interfaces comprise the at least one antenna interface; and
the signal transmission module comprises a plurality of first transmission interfaces and a plurality of second transmission interfaces, the plurality of first transmission interfaces are connected to the plurality of radio frequency interfaces in a one-to-one correspondence, the plurality of second transmission interfaces are connected to the plurality of antenna interfaces in a one-to-one correspondence, and each first transmission interface is interconnected with any one of the plurality of second transmission interfaces.

14. The method according to claim 13, wherein the signal transmission module comprises n first transmission interfaces and n second transmission interfaces, and the signal transmission module comprises n1 first bridge circuits and n1 second bridge circuits; and each first bridge circuit comprises n2 first transmission interfaces, each second bridge circuit comprises n2 second transmission interfaces, and each first bridge circuit is connected to any one of the n1 second bridge circuits, wherein n1×n2 is equal to n.

15. The method according to claim 13 or 14, wherein the signal transmission module further comprises a first switch, the first switch is disposed between a first antenna interface and the second transmission interface correspondingly connected to the first antenna interface, and the first antenna interface is any one of the at least one antenna interface; and
receiving the first radio frequency signal that is looped back by the signal transmission module comprises:
receiving the first radio frequency signal that is looped back by the signal transmission module at the first antenna interface through the turned-off first switch.

16. The method according to claim 15, wherein the radio frequency module controls the first switch to be turned off, and sending the first radio frequency signal through the plurality of radio frequency interfaces comprises:
when a first radio frequency interface among the plurality of radio frequency interfaces is configured to receive a signal, sending, by the radio frequency module, a second radio frequency signal through a plurality of second radio frequency interfaces, wherein the first radio frequency interface is any one of the plurality of radio frequency interfaces, and the second radio frequency interfaces are remaining radio frequency interfaces other than the first radio frequency interface among the plurality of radio frequency interfaces; and
receiving, through the first radio frequency interface, the second radio frequency signal that is looped back by the signal transmission module at the first antenna interface through the turned-off first switch.

17. The method according to claim 16, wherein sending the first radio frequency signal through the plurality of radio frequency interfaces further comprises: sending, by the radio frequency module, a third radio frequency signal through the first radio frequency interface and a third radio frequency interface, wherein the third radio frequency interface is any one of the plurality of second radio frequency interfaces; and
receiving, through a fourth radio frequency interface of the radio frequency module, the third radio frequency signal that is looped back by the signal transmission module at the first antenna interface through the turned-off first switch, wherein the fourth radio frequency interface is any one of the plurality of second radio frequency interfaces other than the third radio frequency interface.

18. The method according to claim 13 or 14, wherein the signal transmission module further comprises a second switch and a third switch; the second switch is disposed between a second antenna interface and the second transmission interface correspondingly connected to the second antenna interface; the second antenna interface is any one of the at least one antenna interface; the third switch is disposed between a fifth radio frequency interface and the first transmission interface correspondingly connected to the fifth radio frequency interface; the fifth radio frequency interface is any one of the plurality of radio frequency interfaces; and the method comprises:
controlling the second switch and the third switch to be turned on, so that a first end of the second switch is connected to a first end of a first conductive path, and a first end of the third switch is connected to a second end of the first conductive path; and a second end of the second switch is further connected to the second transmission interface correspondingly connected to the second antenna interface, and a second end of the third switch is further connected to the fifth radio frequency interface; and
receiving the first radio frequency signal that is looped back by the signal transmission module comprises:
receiving, through the fifth radio frequency interface, a fourth radio frequency signal that is looped back by the signal transmission module at the second antenna interface through the first conductive path, wherein the fourth radio frequency signal is a radio frequency signal sent by a plurality of sixth radio frequency interfaces, and the plurality of sixth radio frequency interfaces are remaining radio frequency interfaces other than the fifth radio frequency interface among the plurality of radio frequency interfaces.

19. The method according to claim 18, wherein the signal transmission module further comprises a fourth switch, and the fourth switch is disposed between a seventh radio frequency interface and the first transmission interface correspondingly connected to the seventh radio frequency interface; the seventh radio frequency interface is any one of the plurality of sixth radio frequency interfaces; and the method comprises:
controlling the second switch and the fourth switch to be turned on, so that the first end of the second switch is connected to a first end of a second conductive path, and a first end of the fourth switch is connected to a second end of the second conductive path; and the second end of the second switch is further connected to the second transmission interface correspondingly connected to the second antenna interface, and a second end of the fourth switch is further connected to the seventh radio frequency interface; and
receiving the first radio frequency signal that is looped back by the signal transmission module comprises:
receiving, through the seventh radio frequency interface, a fifth radio frequency signal that is looped back by the signal transmission module at the second antenna interface through the second switch connected to the fourth switch, wherein the fifth radio frequency signal is a radio frequency signal sent by the fifth radio frequency interface and an eighth radio frequency interface, and the eighth radio frequency interface is any one of the plurality of radio frequency interfaces other than the seventh radio frequency interface.

20. A phase correction method, wherein the method is applied to a radio frequency module, the radio frequency module comprises a plurality of radio frequency interfaces, the plurality of radio frequency interfaces are connected to a signal transmission module, the signal transmission module is further connected to a first antenna interface, and the first antenna interface is further connected to a signal transmitting module; and the method comprises:
receiving, through the plurality of radio frequency interfaces, a radio frequency signal transmitted by the signal transmission module, wherein the radio frequency signal is sent by the signal transmitting module through the first antenna interface, and is transmitted by the signal transmission module to the plurality of radio frequency interfaces; and
correcting, based on the radio frequency signal received by the plurality of radio frequency interfaces, phases of signals received by the plurality of radio frequency interfaces.

21. The method according to claim 20, wherein the signal transmission module is connected to a plurality of antenna interfaces, and the plurality of antenna interfaces comprise the first antenna interface; and
the signal transmission module comprises a plurality of first transmission interfaces and a plurality of second transmission interfaces, the plurality of first transmission interfaces are connected to the plurality of radio frequency interfaces in a one-to-one correspondence, the plurality of second transmission interfaces are connected to the plurality of antenna interfaces in a one-to-one correspondence, and each first transmission interface is interconnected with any one of the plurality of second transmission interfaces.

22. The method according to claim 21, wherein the signal transmission module comprises n first transmission interfaces and n second transmission interfaces, and the signal transmission module comprises n1 first bridge circuits and n1 second bridge circuits; and each first bridge circuit comprises n2 first transmission interfaces, each second bridge circuit comprises n2 second transmission interfaces, and each first bridge circuit is connected to any one of the plurality of second bridge circuits, wherein n1×n2 is equal to n.

23. A communication apparatus, wherein the system comprises a processor and a memory, the memory is configured to store a computer program, and the processor is configured to execute the computer program stored in the memory, so that the system performs the method according to any one of claims 12 to 19.

24. A communication apparatus, wherein the system comprises a processor and a memory, the memory is configured to store a computer program, and the processor is configured to execute the computer program stored in the memory, so that the system performs the method according to any one of claims 20 to 22.

25. A computer-readable storage medium, wherein the computer-readable storage medium stores a computer program or computer instructions, and the computer program or the computer instructions are executed by a processor to implement the method according to any one of claims 12 to 19; or
the computer program or the computer instructions are executed by a processor to implement the method according to any one of claims 20 to 22.

26. A computer program product, wherein when the computer program product is executed by a processor, the method according to any one of claims 12 to 19 is implemented; or
when the computer program product is executed by a processor, the method according to any one of claims 20 to 22 is implemented.
